# EUROPEAN PATENT APPLICATION

(11) **EP 4 685 172 A1**
(43) Date of publication of application: **28.01.2026**
(21) Application number: 24774696.9
(22) Date of filing: 07.03.2024
(51) Int. Cl.: C08G 59/26, C08G 59/28

(54) **CURABLE COMPOUND, CURABLE RESIN COMPOSITION, CURED ARTICLE AND LAMINATE**

(30) Priority: 23.03.2023 JP 2023046583
(71) Applicant: DIC Corporation, Tokyo 174-8520 (JP)
(72) Inventor: OTSU Masato, Sakura-shi, Chiba 285-8668 (JP); ARITA Kazuo, Sakura-shi, Chiba 285-8668 (JP); SUZUKI Etsuko, Sakura-shi, Chiba 285-8668 (JP)
(74) Representative: TBK
(86) International application number: PCT/JP2024/008651
(87) International publication number: WO 2024/195557

(57) **Abstract**

Provided are a compound that is a curable resin but can easily achieve ease of disassembly, repairability, and remoldability in a cured product, as well as a curable resin composition including the same and a cured product thereof. Specifically, the following are used: a curable compound having a curable functional group at an end of a linear polymer and having a maleimide structure in a side chain, a curable compound made by reversibly bonding a conjugated diene compound to the maleimide structure by Diels-Alder reaction, and a curable resin composition containing the curable compound and a compound having reactivity with the curable functional group at an end.

## Description

### Technical Field

The present invention relates to a curable compound having a specific structure, a curable resin composition containing the same, a cured product, and a laminate containing a layer of the cured product.

### Background Art

Cured products obtained by thermally curing phenolic resins, epoxy resins, and the like are excellent in heat resistance, mechanical strength, electrical properties, and adhesiveness, and are essential materials in various fields such as electrical and electronic applications, paints, and adhesives.

On the other hand, cured products using thermosetting resins have low long-term reliability. For example, cracks may occur when cured products of epoxy resins undergo oxidation degradation.

In addition, the cured products obtained once thermosetting resins are cured are less recyclable and less reusable because they cannot be dissolved in solvents (insoluble) and do not melt at high temperatures (infusible). The cured products after use become waste, and reduction in waste and environmental load is now at issue. In addition, high adhesion performance limits ease of disassembly and reusability after use.

Therefore, cured products using thermosetting resins are required to have a long service life, produce less waste, and be reusable. This can be effectively achieved by imparting repairability, remoldability, and ease of disassembly.

Against this background, a method to enable disassembly has been disclosed, in which a thermally decomposable compound is blended in advance with a reactive adhesive component, so that adhesive strength is reduced by a certain amount of heating after use (see, for example, PTL 1).

Furthermore, a technology related to a sealing material including an epoxy resin or the like and capable of self-repairing cracks and peeling is disclosed, in which the sealing material includes a first thermosetting resin and microcapsule particles containing a second thermosetting resin precursor (see, for example, PTL 2).

In addition to the above, there has been much research on the use of reversible bonding such as dynamic covalent bonding and supramolecular bonding in cured products to impart repairability and remoldability.

### Citation List

### Patent Literature

PTL 1: Japanese Unexamined Patent Application Publication No. 2013-256557
PTL 2: Japanese Unexamined Patent Application Publication No. 2017-041496

### Summary of Invention

### Technical Problem

In the technology provided in PTL 1, the adhesive is disposed of after disassembly, and although substrates serving as adherends are recyclable, the overall recyclability is insufficient. The technology described in PTL 2 has a certain degree of self-repairability, but it is not a solution from the viewpoint of reuse, and the problem of waste remains when the material becomes unnecessary. Raw materials involved with the reversible bonding must ensure molecular mobility. This limits the raw materials to the use of gel-like materials that lack mechanical strength. In any case, there is a need for improvement at present. An object of the present invention is to provide a compound that is a curable resin but can easily achieve ease of disassembly, repairability, and remoldability in a cured product, as well as a curable resin composition including the same and a cured product thereof.

### Solution to Problem

As a result of diligent study, the inventors of the present invention have found that the above problem can be solved by using a curable compound having a specific structure and using the same as a curable resin composition. This finding has led to completion of the invention.

More specifically, the present invention provides the following aspects.
[1] A curable compound having a curable functional group at an end of a linear polymer and having a maleimide structure in a side chain.
[2] The curable compound according to [1], wherein the linear polymer includes a flexible structure.
[3] The curable compound according to [1], wherein the curable functional group is a hydroxyl group or a glycidyl ether group and the flexible structure is an alkylene chain or an alkylene ether chain.
[4] The curable compound according to [3], wherein the alkylene chain has 4 to 16 carbon atoms.
[5] A curable compound represented by the following general formula: 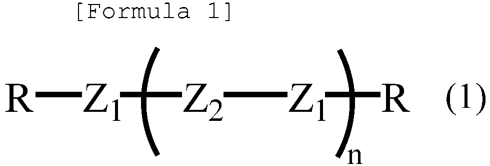
   wherein R is a hydroxyl group, a glycidyl ether group, or a 2-methylglycidyl ether group;
   Z₁ is any of the following (Z₁-1) to (Z₁-7), 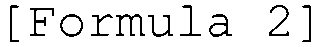 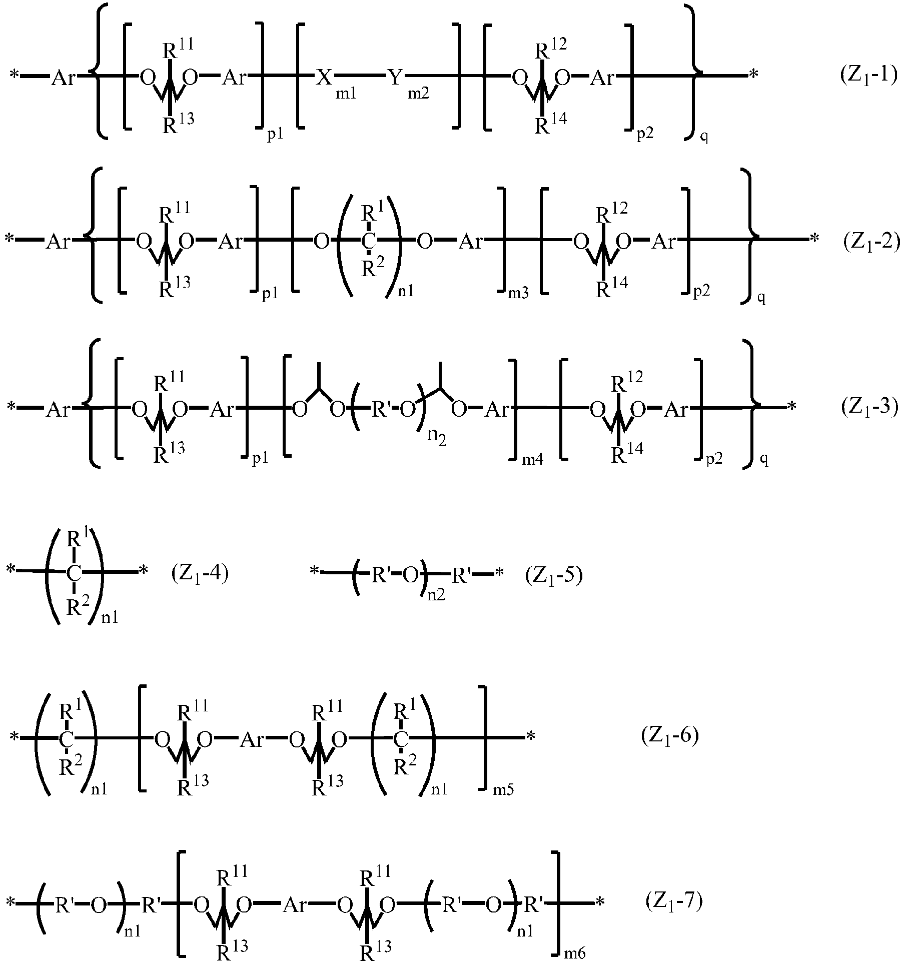 wherein
      each Ar is independently a structure having an aromatic ring unsubstituted or having a substituent,
      R¹¹ and R¹² are each independently a hydroxyl group, a glycidyl ether group, or a 2-methylglycidyl ether group,
      R¹³ and R¹⁴ are each a hydrogen atom or a methyl group,
      R¹ and R² are each independently a hydrogen atom, a methyl group, or an ethyl group,
      each R' is independently a divalent hydrocarbon group having 2 to 12 carbon atoms,
      n is an average number of repeating units and 0.5 to 10,
      n1 is an integer of 4 to 16, and
      n2 is an average number of repeating units and 2 to 30,
      X in formula (Z₁-1) is a structural unit represented by the following general formula (Z₁-1-1) and Y is a structural unit represented by the following general formula (Z₁-1-2), 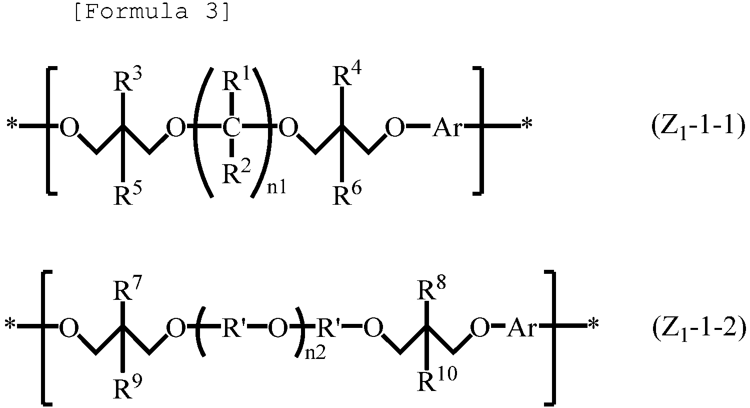
         wherein Ar, R¹, R², R', n1, and n2 are as defined above,
         R³, R⁴, R⁷, and R⁸ are each independently a hydroxyl group, a glycidyl ether group, or a 2-methylglycidyl ether group, and
         R⁵, R⁶, R⁹, and R¹⁰ are each independently a hydrogen atom or a methyl group,
         m1, m2, m3, m4, m5, m6, p1, p2, and q are each an average number of repetitions,
         where m1, m2, m3, m4, m5, and m6 are each independently 0 to 25,
         p1 and p2 are each independently 0 to 5, and
         q is 0.5 to 5,
         provided that bonding between X represented by the general formula (Z₁-1-1) and Y represented by the general formula (Z₁-1-2) is optionally random or block, and total numbers of the structural units X and Y in one molecule are m1 and m2, respectively;
         Z₂ is a structural unit represented by the following general formula (Z₂), 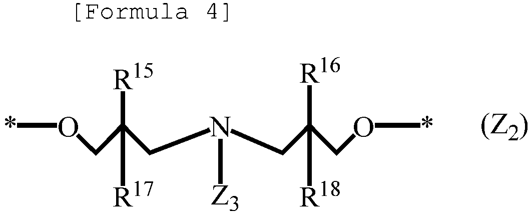
            wherein Z₃ is a structure having a maleimide skeleton,
            R¹⁵ and R¹⁶ are each independently a hydroxyl group, a glycidyl ether group, or a 2-methylglycidyl ether group, and
            R¹⁷ and R¹⁸ are each a hydrogen atom or a methyl group, * in each formula represents a bonding point.
[6] A curable compound (II) containing a reversible bond between the maleimide structure in the curable compound (I) according to any one of [1] to [5] and a conjugated diene compound by Diels-Alder reaction.
[7] The curable compound (II) according to [6], wherein the conjugated diene compound has a furan structure or an anthracene structure.
[8] A curable resin composition containing:
   a curable compound (II) containing a reversible bond between the maleimide structure in the curable compound (I) according to any one of [1] to [5] and a conjugated diene compound by Diels-Alder reaction; and
   a compound (III) having reactivity with a curable functional group at an end in the curable compound (II).
[9] The curable resin composition according to [8], wherein
   the curable functional group at an end in the curable compound (II) is a hydroxyl group,
   the compound (III) having reactivity with the curable functional group at an end in the curable compound is an epoxy resin, and
   the conjugated diene compound has a furan structure or an anthracene structure.
[10] The curable resin composition according to [8] or [9], wherein
   the curable functional group at an end in the curable compound (II) is a glycidyl ether group,
   the compound (III) having reactivity with the curable functional group at an end in the curable compound (II) is a curing agent for epoxy resin, and
   the conjugated diene compound has a furan structure or an anthracene structure.
[11] The curable resin composition according to any one of [8] to [10], wherein a concentration of reversible bonds by Diels-Alder reaction to a total mass of curable components in the curable resin composition is 0.10 mmol/g or more.
[12] A curable resin composition, wherein the curable resin composition according to any one of [8] to [11] is one or more compositions selected from the group consisting of easy-disassembly compositions, repairable compositions, and compositions for remolding materials.
[13] A cured product made by curing the curable resin composition according to [8] to [12].
[14] A laminate having a substrate and a layer including the cured product according to [13].
[15] A heat-resistant member containing the cured product according to [13].
[16] A curable resin composition comprising:
   the curable compound (I) according to any one of [1] to [5];
   a conjugated diene compound; and
   a compound (III) having reactivity with the curable functional group at an end in the curable compound.
[17] The curable resin composition according to [16], wherein
   the curable functional group at an end in the curable compound (I) is a hydroxyl group,
   the compound (III) having reactivity with the curable functional group at an end in the curable compound is an epoxy resin, and
   the conjugated diene compound has a furan structure or an anthracene structure.
[18] The curable resin composition according to [16], wherein
   the curable functional group at an end in the curable compound (I) is a glycidyl ether group,
   the compound (III) having reactivity with the curable functional group at an end in the curable compound is a curing agent for epoxy resin, and
   the conjugated diene compound has a furan structure or an anthracene structure.
[19] The curable resin composition according to any one of [16] to [18], wherein a concentration of reversible bonds by Diels-Alder reaction between the maleimide structure and the conjugated diene compound to a total mass of curable components in the curable resin composition is 0.10 mmol/g or more.
[20] A curable resin composition, wherein the curable resin composition according to any one of [16] to [19] is one or more compositions selected from the group consisting of easy-disassembly compositions, repairable compositions, and compositions for remolding materials.
[21] A cured product made by curing the curable resin composition according to any one of [16] to [20].
[22] A laminate having a substrate and a layer including the cured product according to [21].
[23] A heat-resistant member containing the cured product according to [21].

### Advantageous Effects of Invention

According to the present invention, it is possible to impart ease of disassembly, repairability, and remoldability to the cured product of the curable resin composition, contributing to a longer service life of the cured product itself and reduced waste.

### Description of Embodiments

Embodiments for carrying out the present invention will now be described in detail. It should be understood that the present invention is not limited to the following embodiments, and that design changes, improvements, and the like may be made as appropriate based on the ordinary knowledge of those skilled in the art without departing from the spirit of the present invention.

A curable compound according to an aspect of the present invention has a curable functional group at an end of a linear polymer and has a maleimide structure in a side chain. The maleimide structure in the curable compound is a structure that allows reversible bonding by the Diels-Alder reaction with a compound having a conjugated diene structure described later.

With this configuration, the curable compound is incorporated into a crosslinked structure through a curing reaction based on the curable functional group at its end. In this case, if a compound having a conjugated diene structure is reversibly bonded to the curable compound in advance, or if a compound having a conjugated diene structure is used together during a curing reaction, the crosslinked structure is reversible even after a cured product is formed. This means that when the cured product is cracked or crushed on impact, the cured product is easily broken at the reversible bond and expresses ease of disassembly, while the reversible bond is reversibly reformed even at low temperatures including room temperature, thereby fulfilling functions such as repairability and remoldability. For example, even if the cured product made of the curable compound according to the present invention is crushed, the cured product can be easily repaired based on the reversible bond by being placed at low temperatures including room temperature or under warming or heating conditions. Further, after the cured product is crushed, this can be remolded.

The linear polymer in the present invention may have a branched side chain, for example, having 1 to 3 carbon atoms, and may have a plurality of branched side chains. As used herein "linear" indicates that the backbone with the largest number of covalently bonded atoms is linear and larger than the number of atoms in the branched side chain. In this case, the covalently bonded atoms do not consist only of carbon atoms, but may also include other atoms that can be covalently bonded. The "end of the linear polymer" in the present invention is an end of the linear structure described above, and may also include an end of the side chain. "Having a maleimide structure in the side chain" indicates that a maleimide structure is present at a site different from the covalently bonded atoms that form the linear polymer.

The linear polymer preferably includes a flexible structure. The inclusion of the flexible structure can even further impart flexibility and toughness to the cured product itself. Thus, the cured product can absorb impact even at sites where cracks and the like are likely to occur, or has more excellent conformability to substrates when it is used as an adhesive between substrates with different coefficients of thermal expansion. In addition, ease of disassembly, repairability, and the like are expressed because of the reversible bond, thereby contributing to the durability of the cured product. Examples of the flexible structure include partial structures that do not include an aromatic ring or an alicyclic structure, such as alkylene chain or alkylene ether chain. In this case, the alkylene chain preferably has 2 to 30 carbon atoms, and especially most preferably having 4 to 16 carbon atoms. The alkylene ether chain is preferably, but is not limited to, an alkylene ether chain having 2 to 12 carbon atoms, and preferably has an average number of repetitions in the range of 2 to 30. Furthermore, the flexible structure may have a plurality of identical or different structures in one molecule.

The curable compound according to an aspect of the present invention has a curable functional group at its end. The curable functional group can form a permanent crosslinked structure in the cured product by forming a covalent bond with another compound described later. Examples of the curable functional group include, but are not limited to, vinyl, epoxy, hydroxyl, isocyanate, and carboxy groups. Among these, from the viewpoint of thermal curability, industrial availability of raw materials, and excellent balance of heat resistance, water resistance, moisture heat resistance, and the like of the resulting cured product, a hydroxyl group or a glycidyl ether group optionally having a substituent is preferred. From the viewpoint of industrial availability of raw materials and ease of adjusting the crosslink density when the cured product is formed, the number of curable functional groups in one molecule is preferably in the range of 1 to 5, more preferably 1 to 3, and most preferably 2.

The maleimide structure may have other substituents or the like as long as it can introduce a reversible bond by the Diels-Alder reaction.

Furthermore, the molecular weight of the curable compound according to an aspect of the present invention is not limited and can be adjusted according to the application of a curable composition including a conjugated diene compound and/or a compound having reactivity with the curable functional group as described later. For example, when the resulting curable composition is used for solvent-free adhesive applications and the like, the curable composition is preferably fluid at normal temperature. From this viewpoint, the molecular weight of the curable compound is preferably in the range of 500 to 50,000 as the weight average molecular weight. From the viewpoint of the curing density of the resulting cured product, it is preferable to adjust the equivalent weight of the curable functional group. For example, in a case of having an epoxy group, the epoxy equivalent weight is preferably in the range of 200 to 30,000 g/eq, and in a case of having a hydroxyl group, the hydroxyl equivalent weight is preferably 200 to 30,000 g/eq from the viewpoint of ease of handling.

The curable compound according to an aspect of the present invention is represented by the following general formula (1): 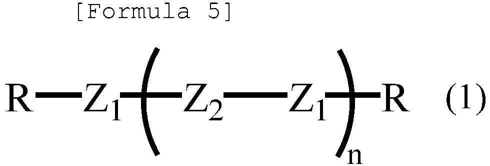
wherein R is a hydroxyl group, a glycidyl ether group, or a 2-methylglycidyl ether group;
Z₁ is any of the following (Z₁-1) to (Z₁-7), 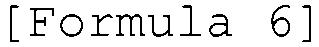 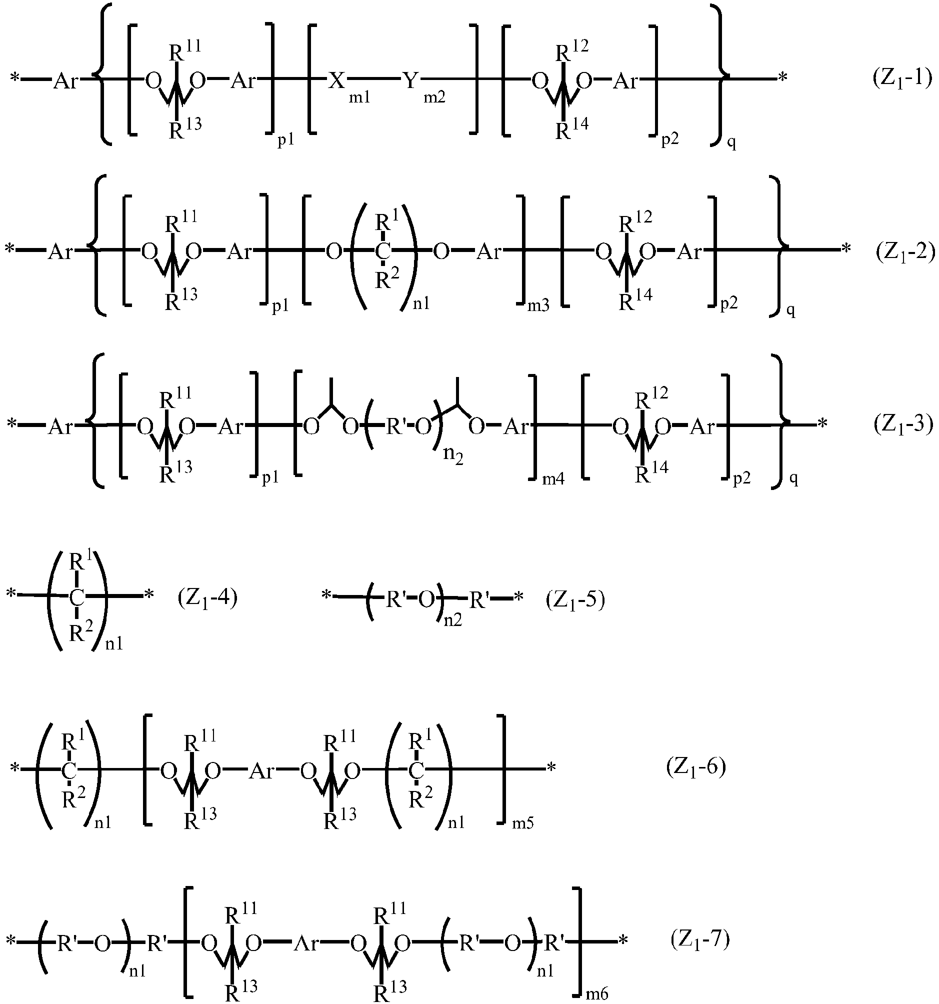 wherein
   each Ar is independently a structure having an aromatic ring unsubstituted or having a substituent,
   R¹¹ and R¹² are each independently a hydroxyl group, a glycidyl ether group, or a 2-methylglycidyl ether group,
   R¹³ and R¹⁴ are each a hydrogen atom or a methyl group,
   R¹ and R² are each independently a hydrogen atom, a methyl group, or an ethyl group,
   each R' is independently a divalent hydrocarbon group having 2 to 12 carbon atoms,
   n is an average number of repeating units and 0.5 to 10,
   n1 is an integer of 4 to 16, and
   n2 is an average number of repeating units and 2 to 30,
   X in formula (Z₁-1) is a structural unit represented by the following general formula (Z₁-1-1) and Y is a structural unit represented by the following general formula (Z₁-1-2), 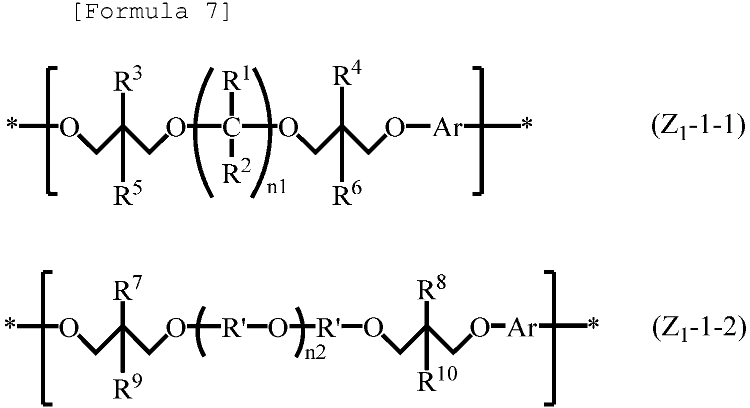
      wherein Ar, R¹, R², R', n1, and n2 are as defined above,
      R³, R⁴, R⁷, and R⁸ are each independently a hydroxyl group, a glycidyl ether group, or a 2-methylglycidyl ether group, and
      R⁵, R⁶, R⁹, and R¹⁰ are each independently a hydrogen atom or a methyl group,
      m1, m2, m3, m4, m5, m6, p1, p2, and q are each an average number of repetitions,
      where m1, m2, m3, m4, m5, and m6 are each independently 0 to 25,
      p1 and p2 are each independently 0 to 5, and
      q is 0.5 to 5,
      provided that bonding between X represented by the general formula (Z₁-1-1) and Y represented by the general formula (Z₁-1-2) is optionally random or block, and total numbers of the structural units X and Y in one molecule are m1 and m2, respectively;
      Z₂ is a structural unit represented by the following general formula (Z₂), 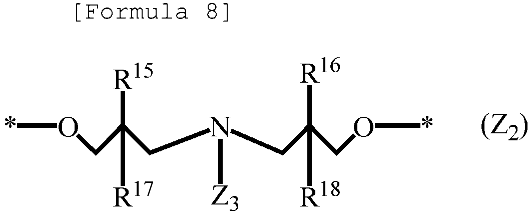
         wherein Z₃ is a structure having a maleimide skeleton,
         R¹⁵ and R¹⁶ are each independently a hydroxyl group, a glycidyl ether group, or a 2-methylglycidyl ether group, and
         R¹⁷ and R¹⁸ are each a hydrogen atom or a methyl group,
         * in each formula represents a bonding point.

Ar in the above general formula is an aromatic ring optionally having a substituent, and is not limited. Examples of the aromatic ring include benzene, naphthalene, anthracene, phenanthrene, and fluorene rings. Examples of the substituent include halogen atom, alkoxy, aralkyloxy, aryloxy, nitro, amide, alkyloxycarbonyl, aryloxycarbonyl, cyano, alkyl, cycloalkyl, aralkyl, and aryl groups. It is preferable that the substituent on Ar does not cause a curing reaction when subsequently used as a curable resin composition, so that the effect of the present invention is more easily expressed.

Among these, Ar is preferably a structure represented by any of the following structural formulae. The lines in the formulae indicate that the structure can be connected at any point on the ring. 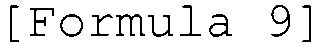 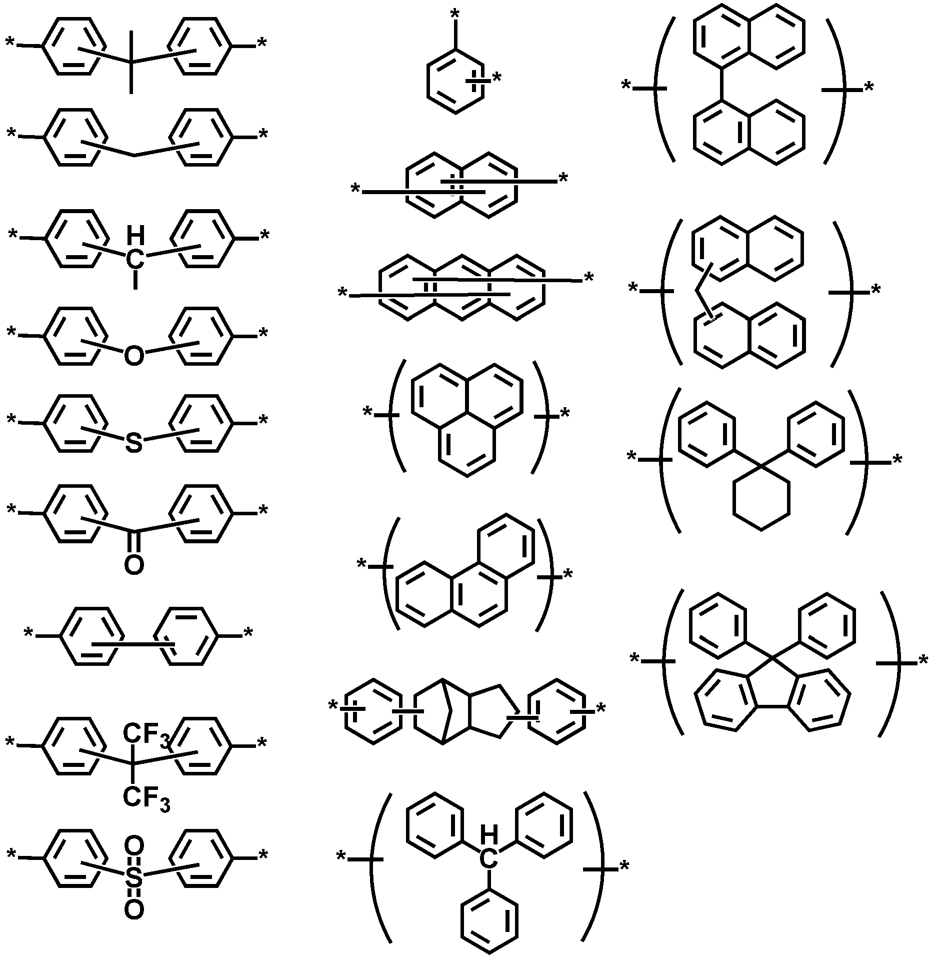 wherein the aromatic ring may be substituted or unsubstituted, and * represents a bonding point.

Other examples of Ar are structures represented by the following formulae. 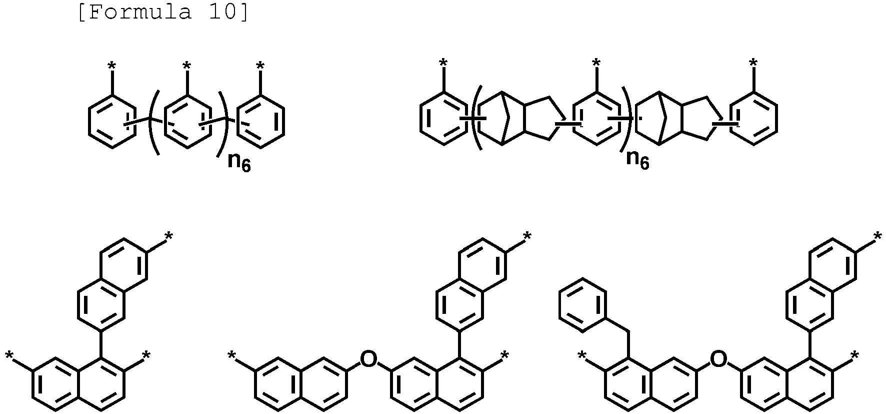 wherein the aromatic ring may be substituted or unsubstituted, n₆ is 1 to 4, and * represents a bonding point.

The following structures of Ar are particularly preferred. * represents a bonding point.

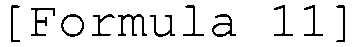

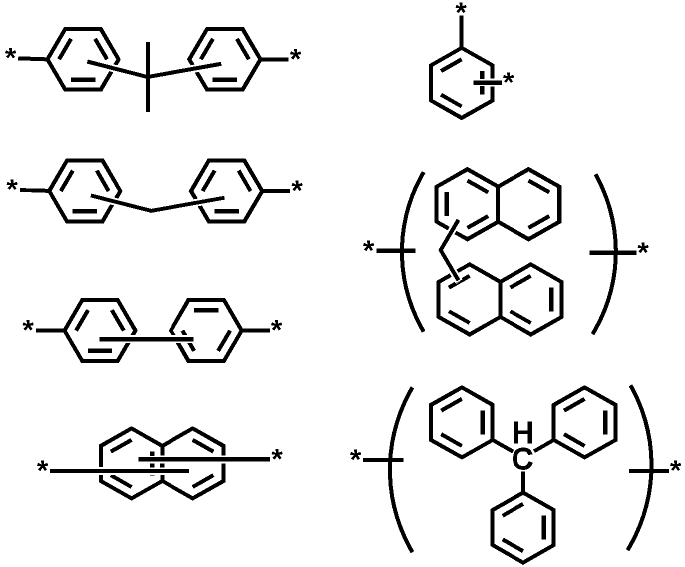

In the above general formula, the repeating unit n₁ is an integer of 2 to 16. When n₁ is 4 or more, the deformation mode of the cured product is likely to be elastic deformation. When n₁ is equal to or less than 16, a decrease in crosslink density can be suppressed. Preferably n₁ is 4 to 15 and even more preferably 6 to 12.

In the above general formula, R¹ and R² are each independently a hydrogen atom, a methyl group, or an ethyl group, preferably a hydrogen atom. R¹³, R¹⁴, R⁵, R⁶, R⁹, R¹⁰, R¹⁷, and R¹⁸ are each a hydrogen atom or a methyl group, preferably a hydrogen atom.

In the above general formula, n₂ is an average number of repeating units and 2 to 30. This range is preferred because if so, the balance between the viscosity of the curable compound and the crosslink density of the resulting cured product is good. Preferably n2 is 2 to 25 and even more preferably 4 to 20.

In the above general formula, R' is a divalent hydrocarbon group having 2 to 12 carbon atoms. In this range, adhesive strength is improved and the deformation mode of the cured product is likely to be elastic deformation. Preferably, R' is a divalent hydrocarbon group having 2 to 6 carbon atoms.

Examples of the divalent hydrocarbon group include, but are not limited to, linear or branched alkylene, alkenylene, alkynylene, cycloalkylene, arylene, and aralkylene groups (divalent groups having alkylene and arylene groups).

Examples of the alkylene group include methylene, ethylene, propylene, butylene, pentylene, hexylene, trimethylene, tetramethylene, pentamethylene, and hexamethylene groups. Examples of the alkenylene group include vinylene, 1-methylvinylene, propenylene, butenylene, and pentenylene groups. Examples of the alkynylene group include ethynylene, propynylene, butynylene, pentynylene, and hexynylene groups. Examples of the cycloalkylene group include cyclopropylene, cyclobutylene, cyclopentylene, and cyclohexylene groups. Examples of the arylene group include phenylene, tolylene, xylylene, and naphthylene groups.

Among these, ethylene, propylene, and tetramethylene groups are preferred from the viewpoint of availability of raw materials and the balance between the viscosity of the resulting curable compound and the flexibility of the cured product.

In the above general formula, m1 and m2 are the average numbers of repetitions of the above structural unit X and structural unit Y, respectively, and are each independently 0 to 25, and m1 + m2 ≥ 1. Preferably, m1 and m2 are each in the range of 0.5 to 10. m3 and m4 are each independently 0 to 25, and each preferably in the range of 0.5 to 10.

Z₃ in the above general formula (Z₂) is a structure having a maleimide skeleton. Examples include the following structures. * represents a bonding point. The rings may have a substituent.

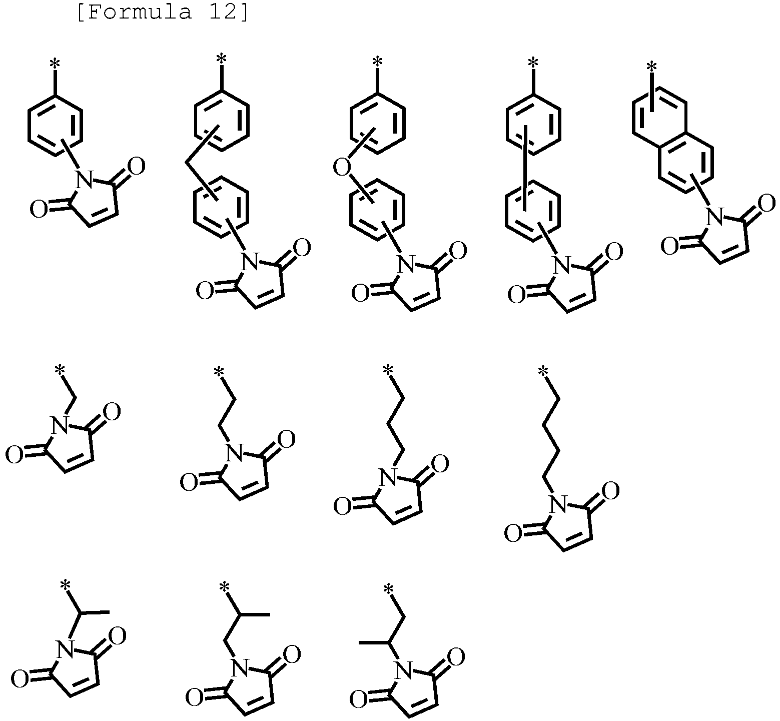

The following structures of Z₃ are particularly preferred. * represents a bonding point.

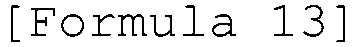

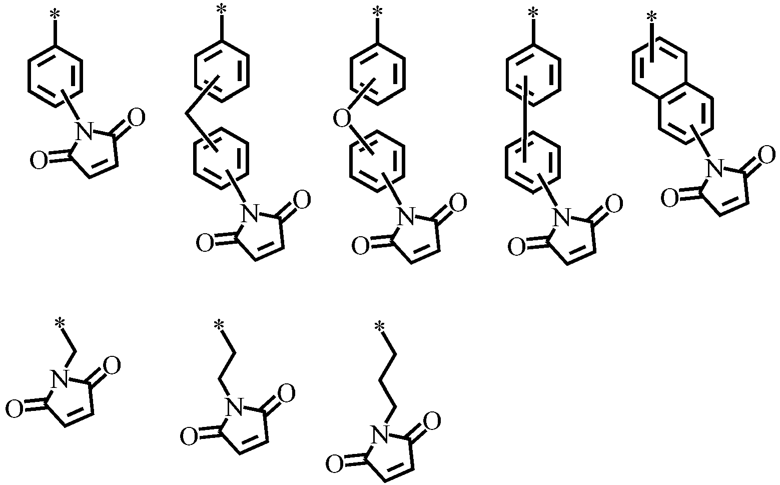

Examples of the curable compound according to the present invention include, but are not limited to, those represented below.

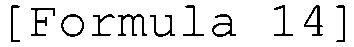

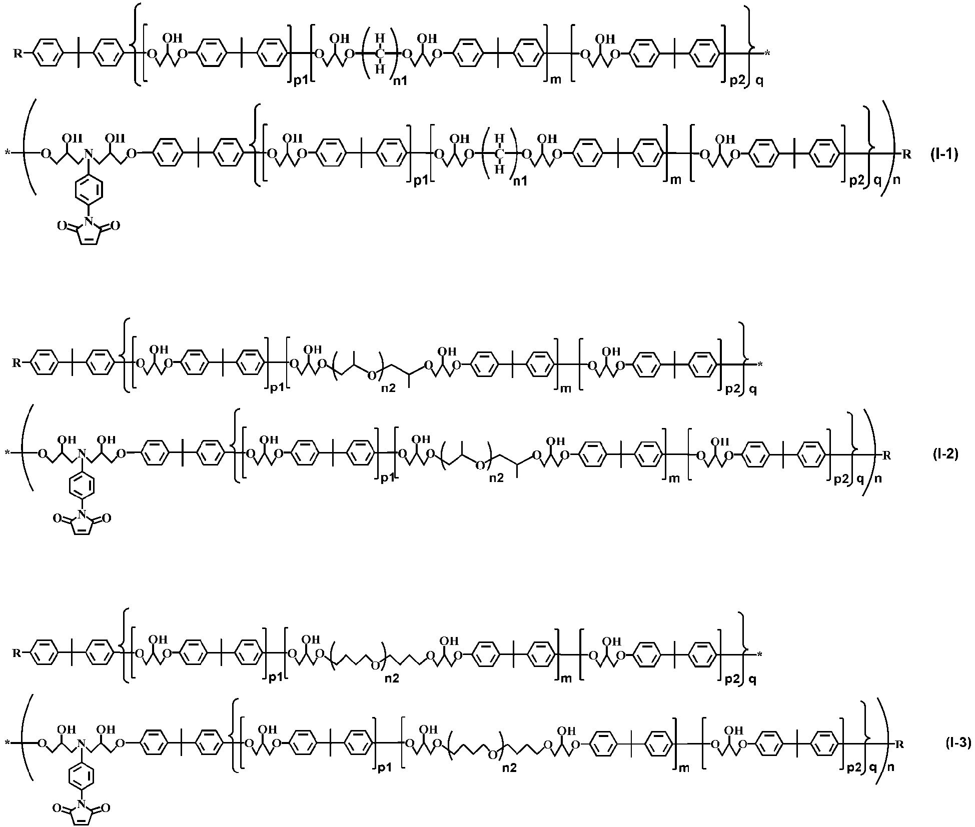

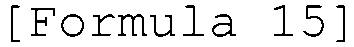

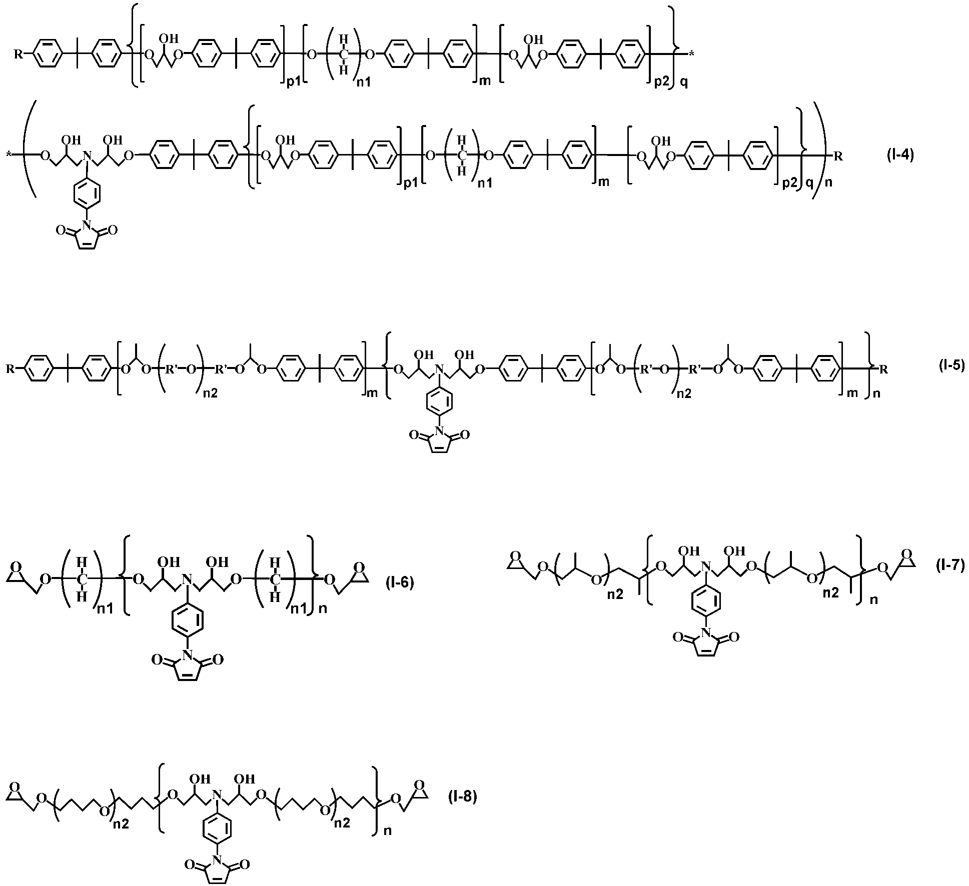

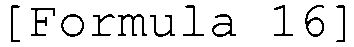

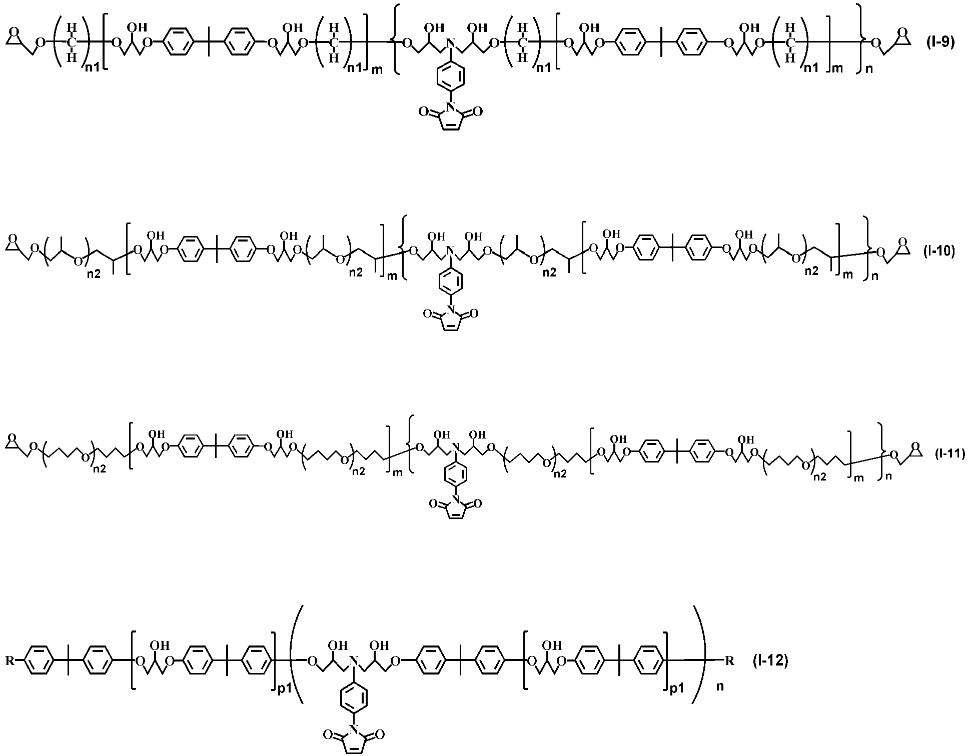

In each of the above structural formulae, R is a hydroxyl group, a glycidyl ether group, or a 2-methylglycidyl ether group, R' is a divalent hydrocarbon group having 2 to 12 carbon atoms, n1 is an integer of 4 to 16, n, n2, m, p1, p2 and q are each an average number of repetitions, n is 0.5 to 10, n2 is 2 to 30, m is 0.5 to 10, p1 and p2 are each independently 0 to 5, and q is 0.5 to 5.

The curable compound according to an aspect of the present invention can be synthesized by a known method. Examples of the methods are as follows.
1. A method in which a glycidyl ether group-containing compound is reacted with an amino group-containing maleimide or the like, using an excess of glycidyl ether groups, to obtain a compound in which the curable functional group is a glycidyl ether group.
2. A method in which the compound having a glycidyl ether group at the end obtained in the method 1 above is reacted with a compound having a phenolic hydroxyl group to obtain a curable compound in which the curable functional group is a hydroxyl group.

The glycidyl ether group-containing compound may be a compound commercially available as an epoxy resin or the like as it is, or may be a synthesized compound.

Examples of the glycidyl ether group-containing compound having an aromatic ring include liquid epoxy resins such as bisphenol A epoxy resin, bisphenol F epoxy resin, bisphenol S epoxy resin, bisphenol AD epoxy resin, polyhydroxybenzene epoxy resin, polyhydroxynaphthalene epoxy resin, biphenyl epoxy resin, and tetramethylbiphenyl epoxy resin, brominated epoxy resins such as brominated phenol novolac epoxy resins, solid bisphenol A epoxy resin, phenol novolac epoxy resin, cresol novolac epoxy resin, triphenylmethane epoxy resin, tetraphenylethane epoxy resin, dicyclopentadiene-phenol addition reaction-type epoxy resin, phenol aralkyl epoxy resin, phenylene ether epoxy resin, naphthylene ether epoxy resin, naphthol novolac epoxy resin, naphthol aralkyl epoxy resin, naphthol-phenol co-condensed novolac epoxy resin, naphthol-cresol co-condensed novolac epoxy resin, aromatic hydrocarbon formaldehyde resin-modified phenol resin epoxy resin, and biphenyl-modified novolac epoxy resin.

In order to impart flexibility to the resulting cured product and easily express ease of disassembly or the like, it is preferable to have a flexible structure. In particular, it is preferable to use a glycidyl ether group-containing compound including an alkylene chain or an alkylene ether chain.

Examples of the glycidyl ether group-containing compound having a flexible structure are not limited. Examples of the diglycidyl ether having an alkylene chain include 1,4-butanediol diglycidyl ether, 1,6-hexanediol diglycidyl ether, 1,9-nonanediol diglycidyl ether, 1,11-undecanediol diglycidyl ether, 1,12-dodecanediol diglycidyl ether, 1,13-tridecanediol diglycidyl ether, 1,14-tetradecanediol diglycidyl ether, 1,15-pentadecanediol diglycidyl ether, 1,16-hexadecanediol diglycidyl ether, 2-methyl-1,11-undecanediol diglycidyl ether, 3-methyl-1,11-undecanediol diglycidyl ether, and 2,6,10-trimethyl-1,11-undecanediol diglycidyl ether. Examples of the glycidyl ether group-containing compound having an alkylene ether chain include polyethylene glycol diglycidyl ether, polypropylene glycol diglycidyl ether, polytetramethylene glycol diglycidyl ether, polypentamethylene glycol diglycidyl ether, polyhexamethylene glycol diglycidyl ether, and polyheptamethylene glycol diglycidyl ether. These compounds may contain organochlorine impurities formed in the glycidyl etherification of a hydroxy compound, and may contain organochlorine such as 1-chloromethyl-2-glycidyl ether (chloromethyl form) represented by the following structure. These glycidyl ether group-containing compounds may be used alone or in combination of two or more.

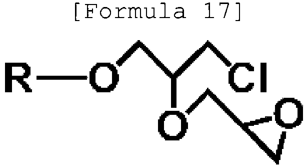

Among these, in terms of excellent balance between flexibility and heat resistance of the resulting cured product, 1,4-butanediol diglycidyl ether, 1,6-hexanediol diglycidyl ether, 1,9-nonanediol diglycidyl ether, 1,12-dodecanediol diglycidyl ether, polyethylene glycol diglycidyl ether, polypropylene glycol diglycidyl ether, and polytetramethylene glycol diglycidyl ether are preferred.

The glycidyl ether group-containing compound can be reacted with amino group-containing maleimides, and a maleimide structure can be easily introduced as a side chain.

Either an aliphatic amine or an aromatic amine can be used as the amino group-containing maleimide. To increase reactivity with the glycidyl ether, it is preferable to use an aliphatic amine-containing maleimide compound. To increase heat resistance of the resulting cured product, it is preferable to use an aromatic amine-containing maleimide compound. Furthermore, since the bond of amine and glycidyl ether has high heat resistance and moisture resistance, the resulting cured product has excellent durability.

Further, a glycidyl ether group-containing compound having both the structural unit X and the structural unit Y can be obtained by reacting a diglycidyl ether of an aliphatic dihydroxy compound, an aliphatic divinyl ether or a dihalogenated alkylene compound with an aromatic hydroxy compound to obtain a compound having a hydroxyl group at the end, which is then epoxidized to form a glycidyl ether group at the end, and the resulting glycidyl ether group-containing compound can be reacted with an amino group-containing maleimide or the like in the same manner as described above to obtain a curable compound.

As the diglycidyl ether of the aliphatic dihydroxy compound, those described above as the glycidyl ether group-containing compound having an alkylene chain or an alkylene ether chain can be used similarly. The preferred compounds are also the same.

Examples of the aliphatic divinyl ether include, but are not limited to, divinyl ethers of linear alkylene groups such as polyethylene glycol divinyl ether, polypropylene glycol divinyl ether, polytetramethylene glycol divinyl ether, 1,3-butylene glycol divinyl ether, 1,4-butanediol divinyl ether, 1,6-hexanediol divinyl ether, 1,9-nonanediol divinyl ether, 1,10-decanediol divinyl ether; divinyl ethers of branched alkylene groups such as neopentyl glycol divinyl ether; and divinyl ethers containing cycloalkane structures such as 1,4-cyclohexanediol divinyl ether, 1,4-cyclohexanedimethanol divinyl ether, tricyclododecanediol divinyl ether, tricyclodecanedimethanol divinyl ether, pentacyclopentadecanedimethanol divinyl ether, and pentacyclopentadecanediol divinyl ether. These may be used alone or in combination of two or more.

Among these, divinyl ethers of a polyether structure or a linear alkylene structure are preferred in terms of excellent balance of flexibility and toughness of the resulting cured product. Polyethylene glycol divinyl ether, polypropylene glycol divinyl ether, polytetramethylene glycol divinyl ether, 1,3-butylene glycol divinyl ether, 1,4-butanediol divinyl ether, 1,6-hexanediol divinyl ether, 1,9-nonanediol divinyl ether, and 1,10-decanediol divinyl ether are most preferred.

Examples of the dihalogenated alkyl compound include, but are not limited to, 1,4-dichlorobutane, 1,5-dichloropentane, 1,6-dichlorohexane, 1,7-dichloroheptane, 1,8-dichlorooctane, 1,9-dichlorononane, 1,10-dichlorodecane, 1,11-dichloroundecane, 1,12-dichlorododecane, 1,4-dibromobutane, 1,5-dibromopentane, 1,6-dibromohexane, 1,7-dibromoheptane, 1,8-dibromooctane, 1,9-dibromononane, 1,10-dibromodecane, 1,11-dibromoundecane, and 1,12-dibromododecane. These may be used alone or in combination of two or more.

Examples of the aromatic hydroxy compound include, but are not limited to, dihydroxybenzenes such as hydroquinone, resorcin, and catechol; trihydroxybenzenes such as pyrogallol, 1,2,4-trihydroxybenzene, and 1,3,5-trihydroxybenzene; triphenylmethane-type phenols such as 4,4',4''-trihydroxy triphenylmethane; dihydroxynaphthalenes such as 1,6-dihydroxynaphthalene, 2,7-dihydroxynaphthalene, 1,4-dihydroxynaphthalene, 1,5-dihydroxynaphthalene, 2,3-dihydroxynaphthalene, and 2,6-dihydroxynaphthalene; tetrafunctional phenols such as 1,1'-methylenebis-(2,7-naphthalenediol), 1,1'-binaphthalene-2,2',7,7'-tetraol, and 1,1'-oxibis-(2,7-naphthalenediol) obtained by a coupling reaction of dihydroxynaphthalenes; bisphenols such as bis(4-hydroxyphenyl) methane, 2,2-bis(4-hydroxyphenyl)propane, 2,2-bis(3-methyl-4-hydroxyphenyl)propane, 1,1-bis(4-hydroxyphenyl)cyclohexane, and 1,1-bis(4-hydroxyphenyl)-1-phenylethane, and bis(4-hydroxyphenyl)sulfone; biphenols such as 2,2'-biphenol, 4,4'-biphenol, (1,1'-biphenyl)-3,4-diol, 3,3'-dimethyl-(1,1'-biphenyl)-4,4'-diol, 3-methyl-(1,1'-biphenyl)-4,4'-diol, 3,3',5,5'-tetramethylbiphenyl-2,2'-diol, 3,3',5,5'-tetramethylbiphenyl-4,4'-diol, 5-methyl-(1,1'-biphenyl)-3,4'-diol, 3'-methyl-(1,1'-biphenyl)-3,4'-diol, and 4'-methyl-(1,1'-biphenyl)-3,4'-diol; alicyclic structure-containing phenols such as polyaddition product of phenol and dicyclopentadiene, and polyaddition product of phenol and terpene compound; naphthols such as bis(2-hydroxy-1-naphthyl)methane and bis(2-hydroxy-1-naphthyl) propane; and so-called xylok-type phenolic resin, which is a condensation reaction product of phenol and phenylenedimethyl chloride or biphenylenedimethyl chloride. These may be used alone or in combination of two or more. Other examples include bifunctional phenolic compounds having a structure in which a methyl group, a t-butyl group, or a halogen atom is substituted as a substituent in the aromatic nucleus of each of the above compounds. The alicyclic structure-containing phenols and the xylok-type phenolic resin, which may contain not only bifunctional components but also tri- or higher functional components, may be used as they are. Alternatively, only the bifunctional components may be extracted and used through a purification process such as column purification.

Among these, bisphenols are preferred in terms of excellent balance of flexibility and toughness of the cured product. In particular, bis(4-hydroxyphenyl)methane and 2,2-bis(4-hydroxyphenyl)propane are preferred in terms of outstanding performance in imparting toughness. When moisture resistance of the cured product is important, alicyclic structure-containing phenols are preferred.

The reaction ratio of the diglycidyl ether of the aliphatic dihydroxy compound to the aromatic hydroxy compound is preferably in the range of 1/1.01 to 1/5.0 (molar ratio), and preferably 1/1.02 to 1/3.0 (molar ratio) in order to achieve a good balance between flexibility and heat resistance of the resulting cured product.

The reaction of the diglycidyl ether of the aliphatic dihydroxy compound with the aromatic hydroxy compound is preferably carried out in the presence of a catalyst. A variety of catalysts can be used as the catalyst, and examples include alkali (earth) metal hydroxides such as sodium hydroxide, potassium hydroxide, lithium hydroxide, and calcium hydroxide, alkali metal carbonates such as sodium carbonate and potassium carbonate, phosphorus compounds such as triphenylphosphine, DMP-30, DMAP, quaternary ammonium salts such as chlorides, bromides, and iodides of tetramethylammonium, tetraethylammonium, tetrabutylammonium, and benzyltributylammonium, and chlorides, bromides, iodides of tetramethylphosphonium, tetraethylphosphonium, tetrabutylphosphonium, and benzyltributylphosphonium, tertiary amines such as triethylamine, N,N-dimethylbenzylamine, 1,8-diazabicyclo[5.4.0]undecene, and 1,4-diazabicyclo[2.2.2]octane, and imidazoles such as 2-ethyl-4-methylimidazole and 2-phenylimidazole. Two or more of these catalysts may be used in combination. Among these, sodium hydroxide, potassium hydroxide, triphenylphosphine, and DMP-30 are preferred because they allow the reaction to proceed quickly and are highly effective in reducing the amount of impurities. The amount of these catalysts used is not particularly limited, but it is preferable to use 0.0001 to 0.01 mole per mole of the phenolic hydroxyl group of the aromatic hydroxy compound. The form of these catalysts is not limited, and the catalysts may be used in the form of an aqueous solution or in the form of a solid.

The reaction of the diglycidyl ether of the aliphatic dihydroxy compound with the aromatic hydroxy compound can be carried out in the absence of a solvent or in the presence of an organic solvent. Examples of the organic solvent that can be used include methyl cellosolve, ethyl cellosolve, toluene, xylene, methyl isobutyl ketone, dimethyl sulfoxide, propyl alcohol, and butyl alcohol. The amount of organic solvent used is usually 50 to 300% by mass, preferably 100 to 250% by mass, relative to the total mass of the raw materials prepared. These organic solvents can be used alone or in mixture. The absence of a solvent is preferred to allow the reaction to proceed quickly. On the other hand, the use of dimethyl sulfoxide is preferred to reduce impurities in the final product.

The reaction temperature of the reaction is usually 50 to 180°C, and the reaction time is usually 1 to 10 hours. A reaction temperature of 100 to 160°C is preferred in order to reduce impurities in the final product. If the resulting compound is significantly colored, an antioxidant or a reducing agent may be added to suppress the coloring. Examples of the antioxidant include, but are not limited to, hindered phenol compounds such as 2,6-dialkylphenol derivatives, divalent sulfur compounds, and phosphite ester compounds containing trivalent phosphorus atoms. Examples of the reducing agent include, but are not limited to, hypophosphorous acid, phosphorous acid, thiosulfuric acid, sulfurous acid, hydrosulfite, and salts thereof.

After completion of the reaction, the reaction mixture may be neutralized or washed with water until the pH value of the reaction mixture reaches 3 to 7, preferably 5 to 7. The neutralization and the washing with water can be performed according to a usual method. For example, when a basic catalyst is used, an acidic substance such as hydrochloric acid, sodium hydrogen phosphate, p-toluenesulfonic acid, or oxalic acid can be used as a neutralizer. After neutralization or washing with water, if necessary, the solvent is distilled off under reduced pressure and heating to concentrate the product, resulting in the compound.

The reaction ratio of the aliphatic divinyl ether to the aromatic hydroxy compound is preferably in the range of 1/1.01 to 1/5.0 (molar ratio), and preferably 1/1.02 to 1/3.0 (molar ratio) in order to achieve a good balance between flexibility and heat resistance of the resulting cured product.

The reaction of the diglycidyl ether of the aliphatic dihydroxy compound with the aromatic hydroxy compound proceeds sufficiently without the use of a catalyst, but a catalyst may be used as appropriate in terms of selection of raw materials and increasing the reaction rate. Examples of the catalyst that can be used herein include inorganic acids such as sulfuric acid, hydrochloric acid, nitric acid, and phosphoric acid; organic acids such as toluenesulfonic acid, methanesulfonic acid, xylenesulfonic acid, trifluoromethanesulfonic acid, oxalic acid, formic acid, trichloroacetic acid, and trifluoroacetic acid; and Lewis acids such as aluminum chloride, iron chloride, tin chloride, gallium chloride, titanium chloride, aluminum bromide, gallium bromide, boron trifluoride ether complex, and boron trifluoride phenol complex. The amount of catalyst used is usually in the range of 10 ppm to 1% by weight relative to the mass of the divinyl ether compound. In this case, it is preferable to select the type and amount used so as not to cause a nuclear addition reaction of the vinyl group to the aromatic ring.

The reaction of the aliphatic divinyl ether with the aromatic hydroxy compound can be carried out in the absence of a solvent or in the presence of an organic solvent. Examples of the organic solvent include aromatic organic solvents such as benzene, toluene, and xylene; ketone organic solvents such as acetone, methyl ethyl ketone, methyl isobutyl ketone, and cyclohexanone; and alcohol organic solvents such as methanol, ethanol, and isopropyl alcohol normal butanol. The amount of organic solvent used is usually 50 to 300% by mass, preferably 100 to 250% by mass, relative to the total mass of the raw materials prepared. These organic solvents can be used alone or in mixture.

The reaction temperature of the reaction is usually 50 to 150°C, and the reaction time is usually 0.5 to 10 hours. In this case, the reaction under an oxygen atmosphere is preferred in order to prevent self-polymerization of the vinyl ether group.

After completion of the reaction, when an organic solvent is used, it is removed under reduced pressure and heating, and when a catalyst is used, it is deactivated by a deactivating agent or the like, if necessary, and removed by washing with water or filtration, resulting in the compound.

The reaction ratio of the dihalogenated alkylene compound to the aromatic hydroxy compound is preferably in the range of 1/1.01 to 1/5.0 (molar ratio), and preferably 1/1.1 to 1/3.0 (molar ratio) in order to achieve a good balance between flexibility and heat resistance of the resulting cured product.

The reaction of the aromatic hydroxy compound with the dihalogenated alkylene compound is preferably carried out in the presence of a basic compound. A variety of basic compounds can be used, and examples include alkali (earth) metal hydroxides such as sodium hydroxide, potassium hydroxide, lithium hydroxide, and calcium hydroxide; and alkali metal carbonates such as sodium carbonate and potassium carbonate. Two or more of these basic compounds can be used in combination. Among these, sodium hydroxide, potassium hydroxide, and potassium carbonate are preferred because they allow the reaction to proceed quickly and are highly effective in reducing the amount of impurities. The amount of these basic compounds used is not particularly limited, but it is preferable to use 0.0001 to 10 moles per mole of the phenolic hydroxyl group of the aromatic hydroxy compound. The form of these basic compounds is not limited, and the basic compounds may be used in the form of an aqueous solution or in the form of a solid. A catalyst can be used in the reaction, and examples of the catalyst include quaternary ammonium salts such as tetra-n-butylammonium bromide, benzyltriethylammonium chloride, cetyltrimethylammonium bromide, cetylpyridinium bromide, tetra-n-butylammonium chloride, tetra-n-butylammonium hydroxide, tetra-n-butylammonium iodide, tetraethylammonium chloride, benzyltributylammonium bromide, benzyltriethylammonium bromide, hexadecyltriethylammonium chloride, tetramethylammonium chloride, hexadecyltrimethylammonium chloride, crown ethers, and potassium iodide.

The reaction of the aromatic hydroxy compound with the dihalogenated alkylene compound can be carried out in the absence of a solvent or in the presence of an organic solvent. Examples of the organic solvent that can be used include toluene, acetone, methyl ethyl ketone (MEK), methyl isobutyl ketone, acetonitrile, and dimethyl formamide. The amount of organic solvent used is usually 50 to 300% by mass, preferably 100 to 1000% by mass, relative to the total mass of the raw materials prepared. These organic solvents can be used alone or in mixture.

The reaction temperature of the reaction is usually room temperature to 150°C, and the reaction time is usually 1 to 24 hours. A reaction temperature of room temperature to 100°C is preferred in order to reduce impurities in the final product.

The glycidyl etherification reaction of the precursor (intermediate) hydroxy compound obtained above can be carried out by any method, for example, by reaction of a phenolic hydroxyl group with epihalohydrin, or by olefination of a phenolic hydroxyl group and oxidation of the carbon-carbon double bond of the olefin with an oxidizing agent. Among these, the method using epihalohydrin is preferred because of availability of raw materials and ease of reaction.

In the method using epihalohydrin, for example, 0.3 to 100 moles of epihalohydrin is added per mole of the aromatic hydroxyl group of the hydroxy compound obtained above, and to this mixture, 0.9 to 2.0 moles of a basic catalyst per mole of the aromatic hydroxyl group of the hydroxy compound is added in batch or gradually while the reaction is carried out at a temperature of 20 to 120°C for 0.5 to 10 hours. The higher the excess amount of epihalohydrin added, the resulting epoxy resin is closer to the theoretical structure and the formation of a secondary hydroxyl group produced by the reaction between the unreacted aromatic hydroxyl group and the epoxy group can be suppressed. From this point of view, it is preferable to use an amount in the range of 2.5 to 100 equivalents. The basic catalyst may be used in a solid form or in an aqueous solution. When an aqueous solution is used, the aqueous solution may be added continuously, and water and epihalohydrin are continuously distilled from the reaction mixture under reduced or normal pressure, and further separated so that water is removed and epihalohydrin is continuously returned to the reaction mixture.

When epihalohydrin is reacted, an accelerator such as quaternary ammonium salt may be used in combination to increase the reaction rate. A variety of quaternary ammonium salts can be used, and examples include tetra-n-butylammonium bromide, benzyltriethylammonium chloride, cetyltrimethylammonium bromide, cetylpyridinium bromide, tetra-n-butylammonium chloride, tetra-n-butylammonium hydroxide, tetra-n-butylammonium iodide, tetraethylammonium chloride, benzyltributylammonium bromide, benzyltriethylammonium bromide, hexadecyltriethylammonium chloride, tetramethylammonium chloride, and hexadecyltrimethylammonium chloride.

In industrial production, the whole amount of the epihalohydrin used for preparation in a first batch of production of the epoxy resin is new, and after the next batch, epihalohydrin collected from a crude reaction product and new epihalohydrin in an amount corresponding to the amount of the epihalohydrin consumed and lost in the reaction are preferably used in combination. At that time, the used epihalohydrin is not particularly limited. Examples thereof include epichlorohydrin and epibromohydrin. Among these, epichlorohydrin is preferred since it is easily available.

Examples of the basic catalyst include, but are not limited to, alkaline earth metal hydroxides, alkali metal carbonates, and alkali metal hydroxides. Among these, an alkali metal hydroxide is preferred because of excellent catalytic activity in the epoxy resin synthesis reaction. For example, sodium hydroxide and potassium hydroxide are preferred. In use, these alkali metal hydroxides may be used in the form of an aqueous solution of about 10 to 55% by mass or may be used in the form of a solid.

The reaction rate in synthesis of the epoxy resin can be increased by using an organic solvent in combination. Examples of the organic solvent include, but are not limited to, ketones such as acetone and methyl ethyl ketone; alcohols such as methanol, ethanol, 1-propyl alcohol, isopropyl alcohol, 1-butanol, secondary butanol, and tertiary butanol; cellosolves such as methyl cellosolve and ethyl cellosolve; ethers such as tetrahydrofuran, 1,4-dioxane, 1,3-dioxane, and diethoxyethane; and aprotic polar solvents such as acetonitrile, dimethyl sulfoxide, and dimethylformamide. These organic solvents may be used alone or may be used in combination of two or more as appropriate in order to adjust polarity.

After the reaction product of these glycidylation reactions is washed with water, the unreacted epihalohydrin and the organic solvent used in combination are removed by distillation under heating and reduced pressure. In order to obtain the epoxy resin in which the amount of hydrolyzable halogen is small, the obtained epoxy resin is dissolved again in an organic solvent such as toluene, methyl isobutyl ketone, or methyl ethyl ketone, and an aqueous solution of alkali metal hydroxide such as sodium hydroxide or potassium hydroxide is added resulting in an additional reaction. At that time, a phase-transfer catalyst such as a quaternary ammonium salt or a crown ether may be used in order to increase the reaction rate.

When the phase-transfer catalyst is used, the amount of the phase-transfer catalyst used is preferably 0.1 to 3.0% by mass of the epoxy resin used. After completion of the reaction, a produced salt is removed by filtration, water-washing, and the like, and the solvent such as toluene or methyl isobutyl ketone is distilled off under heating and reduced pressure, resulting in the high-purity resin.

The curable compound according to the present invention can be obtained by reacting the thus obtained resin having a glycidyl ether group at the end with an amino group-containing maleimide or the like in the same manner as described above.

When the curable functional group at the end is a hydroxyl group in the present invention, the curable compound can be obtained by reacting the above compound having a glycidyl ether group at the end and a maleimide structure in the side chain with a desired phenolic hydroxyl group-containing compound.

These curable compounds having a curable functional group at an end of a linear polymer and having a maleimide structure in a side chain may be hereinafter referred to as curable compound (I).

According to another aspect of the present invention, a reversible bond of a conjugated diene compound by the Diels-Alder reaction is introduced to the maleimide structure in the curable compound (I). The curable compound into which the reversible bond is introduced may be hereinafter referred to as curable compound (II). The conjugated diene compound may be monofunctional, but is preferably bi- or higher functional in order to impart more performance to the cured product.

The reversible bond by the Diels-Alder reaction is an addition reaction between the conjugated diene and the dienophile (maleimide structure) to form a six-membered ring. Since the Diels-Alder reaction is an equilibrium reaction, a Retro-Diels-Alder reaction occurs at a predetermined temperature and dissociation (de-crosslinking) occurs. This reversibility is maintained even after the cured product (three-dimensional crosslinked structure) is formed. Therefore, when the cured product is subjected to mechanical energy such as scratches or external force, the C-C bond of the Diels-Alder reaction unit is preferentially broken due to the lower bonding energy of the C-C bond of the Diels-Alder reaction unit compared with normal covalent bonds. However, the C-C bond of the Diels-Alder reaction unit forms an adduct (Diels-Alder reaction unit) again because equilibrium shifts in the bonding direction in a temperature region below the dissociation temperature. This is thought to enable damage repair and remolding.

Examples of the conjugated diene compound include, but not limited to, compounds having aliphatic hydrocarbon skeletons such as 1,3-butadiene skeleton; aromatic hydrocarbon skeletons such as anthracene; cyclic dienes such as cyclopentadiene and dicyclopentadiene; and heterocyclic skeletons such as imidazole ring, furan ring, triazine ring, thiophene ring, and pyrrole ring. Among these, a compound having an anthracene skeleton or a furan ring is preferred from the viewpoint of balance between the reactivity in use as a curable resin composition and the ease of disassembly and remoldability of the cured product.

Examples of the compound having the compound having an anthracene skeleton or a furan ring are as follows. The lines in the formulae indicate that the structure can be connected at any point on the ring. 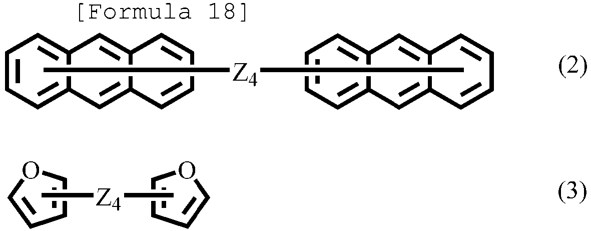 wherein Z₄ is any of the structures represented by the following formulae. 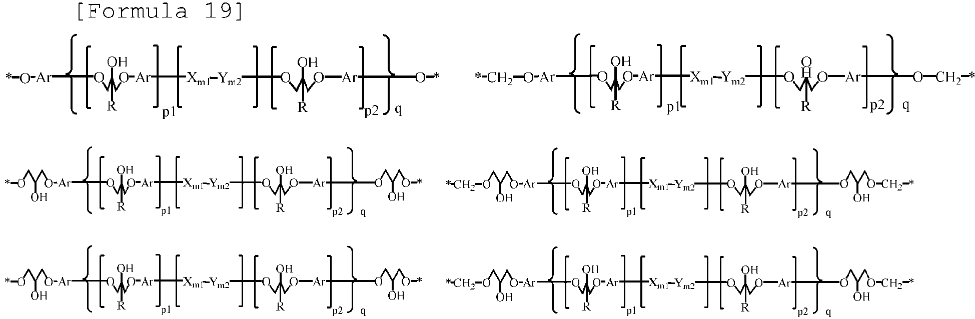 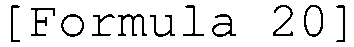 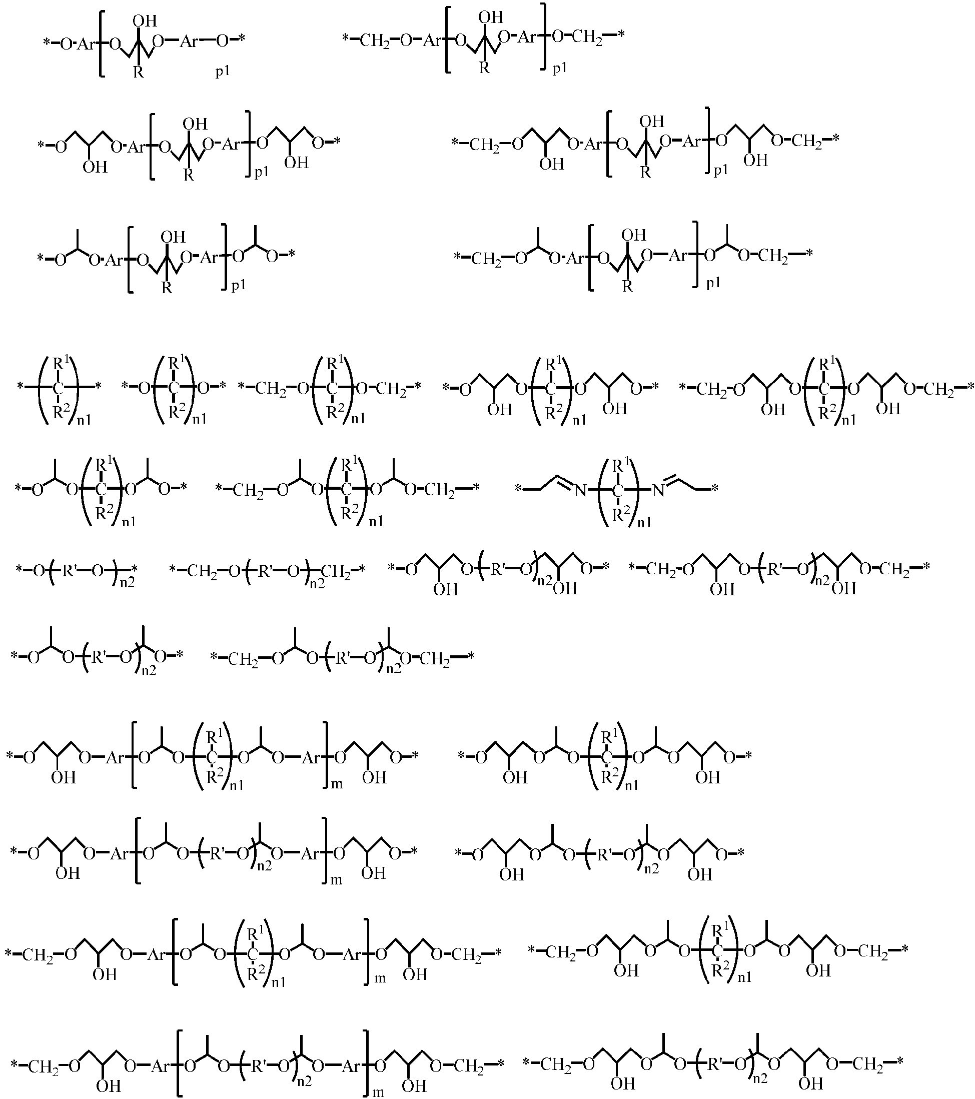
wherein each Ar is independently a structure having an aromatic ring unsubstituted or having a substituent,
R¹ and R² are each independently a hydrogen atom, a methyl group, or an ethyl group,
R is a hydrogen atom or a methyl group,
R' is a divalent hydrocarbon group having 2 to 12 carbon atoms,
n1 is an integer of 2 to 16, n2 is an average number of repeating units and 2 to 30,
m is an average number of repetitions and 0.5 to 10,
q is an average number of repetitions and in a range of 0.5 to 10,
p1 and p2 are each independently 0 to 5,
X is a structural unit represented by the following formula (4), and Y is a structural unit represented by the following formula (5).

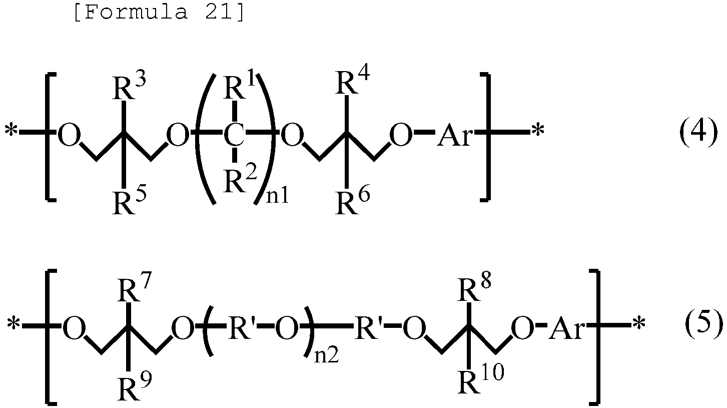

wherein Ar, R¹, R², R', n1, and n2 are as defined above,
R³, R⁴, R⁷, and R⁸ are each independently a hydroxyl group, a glycidyl ether group, or a 2-methylglycidyl ether group, and
R⁵, R⁶, R⁹, and R¹⁰ are each independently a hydrogen atom or a methyl group,
m1, m2, p1, p2, and q are each an average number of repetitions,
where m1 and m2 are each independently 0 to 25 and m1 + m2 ≥ 1,
p1 and p2 are each independently 0 to 5, and
q is 0.5 to 5,
provided that bonding between X represented by the general formula (4) and Y represented by the general formula (5) is optionally random or block, and total numbers of the structural units X and Y in one molecule are m1 and m2, respectively.

The above compound having an anthracene skeleton or a furan ring includes those each independently having a hydrogen atom, a halogen atom, an alkoxy group, an aralkyloxy group, an aryloxy group, a nitro group, an amide group, an alkyloxycarbonyl group, an aryloxycarbonyl group, a cyano group, an alkyl group, a cycloalkyl group, an aralkyl group, or an aryl group as a substituent. In the structures of the compounds listed in the above formulae, the alkoxy group, aralkyloxy group, aryloxy group, carboxy group, alkyloxycarbonyl group, aryloxycarbonyl group, alkyl group, cycloalkyl group, aralkyl group, and aryl group also include those having carbon atoms to which various substituents are bonded.

The Diels-Alder reaction can be performed by any known method. For example, the curable compound (II) can be obtained by mixing the maleimide structure in the curable compound (I) with the conjugated diene compound in equal molar amounts, or in some cases in excess of one of the components, and heating and melting the mixture or dissolving the mixture in a solvent, and stirring at a temperature of room temperature to 110°C for 1 to 24 hours, followed by filtration or solvent distillation without purification. Alternatively, the curable compound (II) can be obtained by an isolation and purification method normally used, such as recrystallization, reprecipitation, and chromatography.

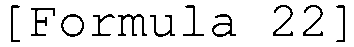

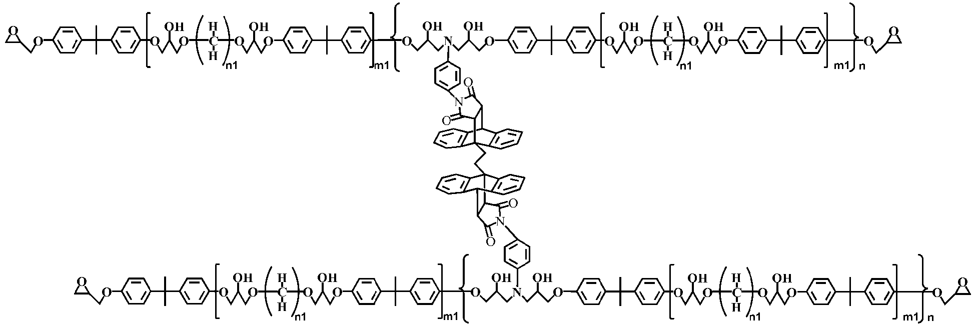

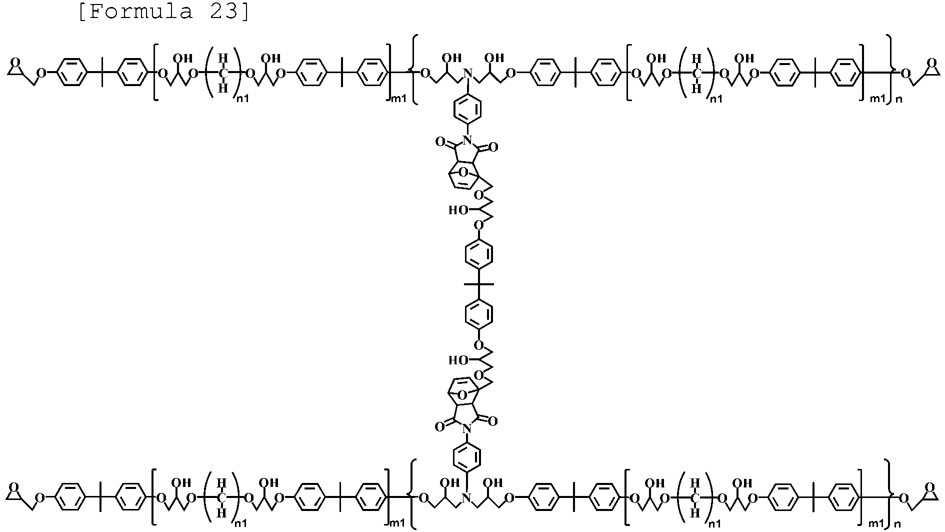

A curable resin composition according to another aspect of the present invention includes the curable compound (I) or (II) described above as essential, and includes the following aspects.
1. A curable resin composition containing the curable compound (I), a conjugated diene compound, and a compound (III) having reactivity with the curable functional group at an end in the curable compound (I).
2. A curable resin composition containing the curable compound (II) and a compound (III) having reactivity with the curable functional group at an end in the curable compound (II).

In the curable resin composition 1 above, the Diels-Alder reaction between the maleimide structure in the curable compound (I) and the conjugated diene compound occurs in the process of obtaining the cured product, that is, the curable compound (II) is formed in-situ. Therefore, there is no difference between the compositions 1 and 2 in the resulting cured product, and the cured product has both a reversible bond by the Diels-Alder reaction and a permanent crosslinked structure (covalent bond) obtained by the reaction between the curable functional group at the end and the compound (III) that can react with the curable functional group. The conjugated diene compound that can be used in this case can be any of those listed above, but from the viewpoint of further expression of the effect in this application, a bi- or higher functional conjugated diene compound is preferred, and a compound having an anthracene skeleton or a furan ring that may have a substituent is particularly preferred.

The compound (III) having reactivity with the curable functional group at the end in the curable resin compositions 1 and 2 above is not particularly limited.

When the curable functional group at the end is a hydroxyl group, examples of the compound (III) include melamine compounds substituted with at least one group selected from methylol group, alkoxymethyl group, and acyloxymethyl group, guanamine compounds, glycol urea compounds, urea compounds, resol resins, epoxy resins, isocyanate compounds, azide compounds, compounds containing double bonds such as alkenyl ether group, acid anhydrides, hexamethylenetetramine and its modified products, and oxazoline compounds. Among these, epoxy resins are preferred from the viewpoint of good curability and easy handling.

Examples of the melamine compounds include hexamethylolmelamine, hexamethoxymethylmelamine, compounds in which one to six methylol groups of hexamethylolmelamine are methoxymethylated, hexamethoxyethylmelamine, hexaacyloxymethylmelamine, and compounds in which one to six methylol groups of hexamethylolmelamine are acyloxymethylated.

Examples of the guanamine compounds include tetramethylolguanamine, tetramethoxymethylguanamine, tetramethoxymethylbenzoguanamine, compounds in which one to four methylol groups of tetramethylolguanamine are methoxymethylated, tetramethoxyethylguanamine, tetraacyloxyguanamine, and compounds in which one to four methylol groups of tetramethylolguanamine are acyloxymethylated.

Examples of the glycoluryl compounds include 1,3,4,6-tetrakis(methoxymethyl)glycoluryl, 1,3,4,6-tetrakis(butoxymethyl)glycoluryl, and 1,3,4,6-tetrakis(hydroxymethyl)glycoluryl.

Examples of the urea compounds include 1,3-bis(hydroxymethyl)urea, 1,1,3,3-tetrakis(butoxymethyl)urea, and 1,1,3,3-tetrakis(methoxymethyl)urea.

Examples of the resol resins include polymers obtained by reacting a phenolic hydroxyl group-containing compound such as phenol, alkylphenol such as cresol and xylenol, phenylphenol, resorcinol, biphenyl, bisphenol such as bisphenol A and bisphenol F, naphthol, or dihydroxynaphthalene with an aldehyde compound under alkaline catalytic conditions.

Examples of the epoxy resins include liquid epoxy resins such as bisphenol A epoxy resin, bisphenol F epoxy resin, bisphenol S epoxy resin, bisphenol AD epoxy resin, polyhydroxybenzene epoxy resin, polyhydroxynaphthalene epoxy resin, biphenyl epoxy resin, and tetramethylbiphenyl epoxy resin, brominated epoxy resins such as brominated phenol novolac epoxy resin, solid bisphenol A epoxy resin, phenol novolac epoxy resin, cresol novolac epoxy resin, triphenylmethane epoxy resin, tetraphenylethane epoxy resin, dicyclopentadiene-phenol addition reaction-type epoxy resin, phenol aralkyl epoxy resin, phenylene ether epoxy resin, naphthylene ether epoxy resin, naphthol novolac epoxy resin, naphthol aralkyl epoxy resin, naphthol-phenol co-condensed novolac epoxy resin, naphthol-cresol co-condensed novolac epoxy resin, aromatic hydrocarbon formaldehyde resin-modified phenol resin epoxy resin, and biphenyl-modified novolac epoxy resin. These may be used alone or in combination of two or more. It is preferable to select and use various types according to the intended use and physical properties of the cured product.

Examples of the isocyanate compounds include tolylene diisocyanate, diphenylmethane diisocyanate, hexamethylene diisocyanate, and cyclohexane diisocyanate.

Examples of the azide compounds include 1,1'-biphenyl-4,4'-bisazide, 4,4'-methylidenebisazide, and 4,4'-oxybisazide.

Examples of the compounds containing double bonds such as alkenyl ether group include ethylene glycol divinyl ether, triethylene glycol divinyl ether, 1,2-propanediol divinyl ether, 1,4-butanediol divinyl ether, tetramethylene glycol divinyl ether, neopentyl glycol divinyl ether, trimethylolpropane trivinyl ether, hexanediol divinyl ether, 1,4-cyclohexanediol divinyl ether, pentaerythritol trivinyl ether, pentaerythritol tetravinyl ether, sorbitol tetravinyl ether, sorbitol pentavinyl ether, and trimethylolpropane trivinyl ether.

Examples of the acid anhydrides include aromatic acid anhydrides such as phthalic anhydride, trimellitic anhydride, pyromellitic anhydride, 3,3',4,4'-benzophenonetetracarboxylic dianhydride, biphenyltetracarboxylic dianhydride, 4,4'-(isopropylidene)diphthalic anhydride, 4,4'-(hexafluoroisopropylidene)diphthalic anhydride; and alicyclic carboxylic acid anhydrides such as tetrahydrophthalic anhydride, methyltetrahydrophthalic anhydride, hexahydrophthalic anhydride, methylhexahydrophthalic anhydride, endomethylenetetrahydrophthalic anhydride dodecenyl succinic anhydride, and trialkyltetrahydrophthalic anhydride.

Furthermore, when the curable functional group in the curable compound is a hydroxyl group, which is combined with an epoxy resin to form a curable resin composition, a curing agent for epoxy resin may be blended.

Examples of the curing agent that can be used herein include various known curing agents for epoxy resins, such as amine compounds, acid anhydrides, amide compounds, phenolic hydroxyl group-containing compounds, carboxylic acid compounds, and thiol compounds.

Examples of the amine compounds include aliphatic amine compounds such as trimethylenediamine, ethylenediamine, N,N,N',N'-tetramethylethylenediamine, pentamethyldiethylenetriamine, triethylenediamine, dipropylenediamine, N,N,N',N'-tetramethylpropylenediamine, tetramethylenediamine, pentanediamine, hexamethylenediamine, trimethylhexamethylenediamine, N,N,N',N'-tetramethylhexamethylenediamine, N,N-dimethylcyclohexylamine, diethylenetriamine, triethylenetetramine, tetraethylenepentamine, dimethylaminopropylamine, diethylaminopropylamine, dibutylaminopropylamine, 1,4-diazabicyclo[2,2,2]octane(triethylenediamine), polyoxyethylenediamine, polyoxypropylenediamine, bis(2-dimethylaminoethyl) ether, dimethylaminoethoxy ethoxyethanol, triethanolamine, dimethylaminohexanol, benzylmethylamine, dimethylbenzylamine, m-xylenediamine, and α-methylbenzylmethylamine;
alicyclic and heterocyclic amine compounds such as piperidine, piperazine, menthanediamine, isophoronediamine, methylmorpholine, ethylmorpholine, N,N',N"-tris(dimethylaminopropyl)hexahydro-s-triazine, a 3,9-bis(3-aminopropyl)-2,4,8,10-tetraoxaspiro[5,5]undecane adduct, N-aminoethylpiperazine, trimethylaminoethylpiperazine, bis(4-aminocyclohexyl)methane, N,N'-dimethylpiperazine, and 1,8-diazabicyclo-[5.4.0]-undecene (DBU);
aromatic amine compounds such as o-phenylenediamine, m-phenylenediamine, p-phenylenediamine, diaminodiphenylmethane, diaminodiphenyl sulfone, pyridine, and picoline; and
modified amine compounds such as an epoxy compound-added polyamine, a polyamine obtained by Michael addition, a polyamine obtained by Mannich addition, a thiourea-added polyamine, a ketone-capped polyamine, dicyandiamide, guanidine, an organic acid hydrazide, diaminomaleonitrile, amineimide, a boron trifluoride-piperidine complex, and a boron trifluoride-monoethylamine complex.

Examples of the acid anhydrides include phthalic anhydride, trimellitic anhydride, pyromellitic anhydride, maleic anhydride, maleic anhydride polypropylene glycol, tetrahydrophthalic anhydride, methyltetrahydrophthalic anhydride, methyl nadic anhydride, hexahydrophthalic anhydride, and methylhexahydrophthalic anhydride.

Examples of the phenolic hydroxyl group-containing compounds include bisphenols such as bis(4-hydroxyphenyl) methane, 2,2-bis(4-hydroxyphenyl)propane, 2,2-bis(3-methyl-4-hydroxyphenyl)propane, 1,1-bis(4-hydroxyphenyl)cyclohexane, and 1,1-bis(4-hydroxyphenyl)-1-phenylethane, and bis(4-hydroxyphenyl)sulfone; and polyhydric phenol compounds such as a phenol novolac resin, a cresol novolac resin, an aromatic hydrocarbon formaldehyde resin-modified phenolic resin, a dicyclopentadiene phenol-added resin, a phenol aralkyl resin (xylok resin), a naphthol aralkyl resin, a trimethylolmethane resin, a tetraphenylolethane resin, a naphthol novolac resin, a naphthol-phenol co-condensed novolac resin, a naphthol-cresol co-condensed novolac resin, a biphenyl-modified phenolic resin (a polyhydric phenol compound having a phenolic nucleus linked through a bismethylene group), a biphenyl-modified naphthol resin (a polyhydric naphthol compound having a phenolic nucleus linked through a bismethylene group), an aminotriazine-modified phenolic resin (a polyhydric phenol compound having a phenolic nucleus linked through melamine, benzoguanamine, or the like), and an alkoxy group-containing aromatic ring-modified novolac resin (a polyhydric phenol compound in which a phenolic nucleus and an alkoxy group-containing aromatic ring are linked through formaldehyde).

Examples of the amide compounds include dicyandiamide and polyamidoamines. Examples of the polyamidoamines include polyamidoamines obtained by a reaction of an aliphatic dicarboxylic acid such as succinic acid, glutaric acid, adipic acid, pimelic acid, suberic acid, or azelaic acid, or a carboxylic acid compound such as a fatty acid or a dimer acid with an aliphatic polyamine or a polyamine having a polyoxyalkylene chain.

Examples of the carboxylic acid compounds include carboxylic acid polymers such as carboxylic acid-terminated polyester, polyacrylic acid, and maleic acid-modified polypropylene glycol.

The thiol compound is preferably a compound containing two or more thiol groups in one molecule. Examples include 3,3'-dithiodipropionic acid, trimethylolpropane tris(thioglycolate), pentaerythritol tetrakis(thioglycolate), ethylene glycol dithioglycolate, 1,4-bis(3-mercaptobutyryloxy)butane, tris[(3-mercaptopropionyloxy)-ethyl]-isocyanurate, trimethylolpropane tris(3-mercaptopropionate), pentaerythritol tetrakis(3-mercaptopropionate), pentaerythritol tetrakis(3-mercaptobutyrate), dipentaerythritol hexakis(3-mercaptopropionate), 1,3,4,6-tetrakis(2-mercaptoethyl)glycoluril, 4-butanedithiol, 1,6-hexanedithiol, and 1,10-decanedithiol.

When these curing agents are used, one type of the curing agents may be used alone, or two or more types thereof may be mixed. For applications such as underfill materials and general coating applications, it is preferable to use the amine compounds, the carboxylic acid compounds, and/or the acid anhydride compounds. For adhesive and flexible wiring board applications, the amine compounds, especially dicyandiamide, are preferred in terms of workability, curability, and long-term stability. For semiconductor sealing material applications, solid-type phenol compounds are preferred in terms of heat resistance of the cured product. For battery applications, aliphatic amines and thiol compounds are preferred in terms of low-temperature curing.

When an epoxy resin is used, the curable resin composition may contain a curing accelerator. As the curing accelerator, various compounds can be used. Examples thereof include urea compounds, phosphorus compounds, tertiary amines, imidazoles, imidazolines, organic acid metal salts, Lewis acids, and amine complex salts. For use in adhesive applications, urea compounds, especially 3-(3,4-dichlorophenyl)-1,1-dimethylurea (DCMU), are preferred since they are excellent in workability and low-temperature curability. For use in semiconductor sealing material applications, triphenyl phosphine as a phosphorus compound and 1,8-diazabicyclo-[5.4.0]-undecene as a tertiary amine are preferred since they are excellent in curability, heat resistance, electrical characteristics, moisture-resistant reliability, and the like.

Examples of the phosphorus compounds include alkyl phosphines such as ethylphosphine and butylphosphine, primary phosphines such as phenylphosphine; dialkyl phosphines such as dimethylphosphine and dipropylphosphine; secondary phosphines such as diphenylphosphine and methylethylphosphine; and tertiary phosphines such as trimethylphosphine, triethylphosphine, and triphenylphosphine.

Examples of the imidazoles include imidazole, 1-methylimidazole, 2-methylimidazole, 3-methylimidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, a 2-phenylimidazole isocyanuric acid adduct, a 2-methylimidazole isocyanuric acid adduct, 2-phenyl-4,5-dihydroxymethylimidazole, 2-phenyl-4-methyl-5-hydroxymethylimidazole, 1-cyanoethyl-2-phenyl-4,5-di(2-cyanoethoxy)methylimidazole, 1-dodecyl-2-methyl-3-benzylimidazolium chloride, and 1-benzyl-2-phenylimidazole hydrochloride.

Examples of the imidazoline compounds include 2-methylimidazoline and 2-phenylimidazoline.

Examples of the urea compounds include p-chlorophenyl-N,N-dimethyl urea, 3-phenyl-1,1-dimethyl urea, 3-(3,4-dichlorophenyl)-N,N-dimethyl urea, and N-(3-chloro-4-methylphenyl)-N',N'-dimethyl urea.

When the curable functional group at the end is a glycidyl ether group, examples of the compound (III) include various known curing agents for epoxy resins, such as amine compounds, acid anhydrides, amide compounds, phenolic hydroxyl group-containing compounds, carboxylic acid compounds, and thiol compounds. The curing agent can be selected as appropriate according to physical properties of the target cured product, and in particular, a hydroxyl group-containing compound is preferred from the viewpoint of mechanical strength and adhesion to a substrate.

Examples of the amine compounds include aliphatic amine compounds such as trimethylenediamine, ethylenediamine, N,N,N',N'-tetramethylethylenediamine, pentamethyldiethylenetriamine, triethylenediamine, dipropylenediamine, N,N,N',N'-tetramethylpropylenediamine, tetramethylenediamine, pentanediamine, hexamethylenediamine, trimethylhexamethylenediamine, N,N,N',N'-tetramethylhexamethylenediamine, N,N-dimethylcyclohexylamine, diethylenetriamine, triethylenetetramine, tetraethylenepentamine, dimethylaminopropylamine, diethylaminopropylamine, dibutylaminopropylamine, 1,4-diazabicyclo[2,2,2]octane(triethylenediamine), polyoxyethylenediamine, polyoxypropylenediamine, bis(2-dimethylaminoethyl) ether, dimethylaminoethoxy ethoxyethanol, triethanolamine, dimethylaminohexanol, benzylmethylamine, dimethylbenzylamine, m-xylenediamine, and α-methylbenzylmethylamine;
alicyclic and heterocyclic amine compounds such as piperidine, piperazine, menthanediamine, isophoronediamine, methylmorpholine, ethylmorpholine, N,N',N"-tris(dimethylaminopropyl)hexahydro-s-triazine, a 3,9-bis(3-aminopropyl)-2,4,8,10-tetraoxaspiro[5,5]undecane adduct, N-aminoethylpiperazine, trimethylaminoethylpiperazine, bis(4-aminocyclohexyl)methane, N,N'-dimethylpiperazine, and 1,8-diazabicyclo-[5.4.0]-undecene (DBU);
aromatic amine compounds such as o-phenylenediamine, m-phenylenediamine, p-phenylenediamine, diaminodiphenylmethane, diaminodiphenyl sulfone, pyridine, and picoline; and
modified amine compounds such as an epoxy compound-added polyamine, a polyamine obtained by Michael addition, a polyamine obtained by Mannich addition, a thiourea-added polyamine, a ketone-capped polyamine, dicyandiamide, guanidine, an organic acid hydrazide, diaminomaleonitrile, amineimide, a boron trifluoride-piperidine complex, and a boron trifluoride-monoethylamine complex.

Examples of the acid anhydrides include phthalic anhydride, trimellitic anhydride, pyromellitic anhydride, maleic anhydride, maleic anhydride polypropylene glycol, tetrahydrophthalic anhydride, methyltetrahydrophthalic anhydride, methyl nadic anhydride, hexahydrophthalic anhydride, and methylhexahydrophthalic anhydride.

Examples of the phenolic hydroxyl group-containing compounds include bisphenols such as bis(4-hydroxyphenyl) methane, 2,2-bis(4-hydroxyphenyl)propane, 2,2-bis(3-methyl-4-hydroxyphenyl)propane, 1,1-bis(4-hydroxyphenyl)cyclohexane, and 1,1-bis(4-hydroxyphenyl)-1-phenylethane, and bis(4-hydroxyphenyl)sulfone; and polyhydric phenol compounds such as a phenol novolac resin, a cresol novolac resin, an aromatic hydrocarbon formaldehyde resin-modified phenolic resin, a dicyclopentadiene phenol-added resin, a phenol aralkyl resin (xylok resin), a naphthol aralkyl resin, a trimethylolmethane resin, a tetraphenylolethane resin, a naphthol novolac resin, a naphthol-phenol co-condensed novolac resin, a naphthol-cresol co-condensed novolac resin, a biphenyl-modified phenolic resin (a polyhydric phenol compound having a phenolic nucleus linked through a bismethylene group), a biphenyl-modified naphthol resin (a polyhydric naphthol compound having a phenolic nucleus linked through a bismethylene group), an aminotriazine-modified phenolic resin (a polyhydric phenol compound having a phenolic nucleus linked through melamine, benzoguanamine, or the like), and an alkoxy group-containing aromatic ring-modified novolac resin (a polyhydric phenol compound in which a phenolic nucleus and an alkoxy group-containing aromatic ring are linked through formaldehyde).

Examples of the amide compounds include dicyandiamide and polyamidoamines. Examples of the polyamidoamines include polyamidoamines obtained by a reaction of an aliphatic dicarboxylic acid such as succinic acid, glutaric acid, adipic acid, pimelic acid, suberic acid, or azelaic acid, or a carboxylic acid compound such as a fatty acid or a dimer acid with an aliphatic polyamine or a polyamine having a polyoxyalkylene chain.

Examples of the carboxylic acid compounds include carboxylic acid polymers such as carboxylic acid-terminated polyester, polyacrylic acid, and maleic acid-modified polypropylene glycol.

The thiol compound is preferably a compound containing two or more thiol groups in two molecules. Examples include 3,3'-dithiodipropionic acid, trimethylolpropane tris(thioglycolate), pentaerythritol tetrakis(thioglycolate), ethylene glycol dithioglycolate, 1,4-bis(3-mercaptobutyryloxy)butane, tris[(3-mercaptopropionyloxy)-ethyl]-isocyanurate, trimethylolpropane tris(3-mercaptopropionate), pentaerythritol tetrakis(3-mercaptopropionate), pentaerythritol tetrakis(3-mercaptobutyrate), dipentaerythritol hexakis(3-mercaptopropionate), 1,3,4,6-tetrakis(2-mercaptoethyl)glycoluril, 4-butanedithiol, 1,6-hexanedithiol, and 1,10-decanedithiol.

When these curing agents are used, one type of the curing agents may be used alone, or two or more types thereof may be mixed. For applications such as underfill materials and general coating applications, it is preferable to use the amine compounds, the carboxylic acid compounds, and/or the acid anhydride compounds. For adhesive and flexible wiring board applications, the amine compounds, especially dicyandiamide, are preferred in terms of workability, curability, and long-term stability. For semiconductor sealing material applications, solid-type phenol compounds are preferred in terms of heat resistance of the cured product. For battery applications, aliphatic amines and thiol compounds are preferred in terms of low-temperature curing.

The concentration of reversible bonds in the curable resin composition of the present invention is preferably 0.10 mmol/g or more relative to the total mass of curable components in the curable resin composition. With such a configuration, all of ease of disassembly, repairability, and remoldability of the cured product obtained from the curable resin composition are further improved. The concentration of reversible bonds is more preferably 0.10 to 3.00 mmol/g, and even more preferably 0.15 to 2.00 mmol/g. The concentration of reversible bonds can be selected as appropriate according to a glass transition temperature or the like as defined by the tanδ peak top of the target cured product using a dynamic viscoelasticity analyzer (DMA). For example, when the glass transition temperature is used as a guide, sufficient repairability and remoldability functions are likely to be expressed even at low concentration in a preferred range if the glass transition temperature of the cured product is near room temperature. On the other hand, if the glass transition temperature of the target cured product is above 100°C as a guide, the functions are more likely to be expressed at high concentration in the preferred range. However, in a temperature range above the glass transition temperature measured by DMA, molecular mobility is generally high, and sufficient repairability and remoldability functions are likely to be expressed even with a low concentration of reversible bonds. Therefore, the effect of expressing repairability and remoldability functions can also be adjusted, for example, by appropriately adjusting aging temperature for repair and heating temperature for remolding. Thus, the relation between the glass transition temperature of the cured product and the concentration of reversible bonds is not limited to these.

For the curable resin composition of the present invention, an epoxy resin represented by the following formula (6) and having an epoxy equivalent weight of 500 to 10000 g/eq may be used, because the curable resin composition achieves excellent curability, and mechanical strength and heat resistance in the cured product. Specifically, when the curable functional group at the end is a hydroxyl group, the following epoxy resin may be used as the compound (III). 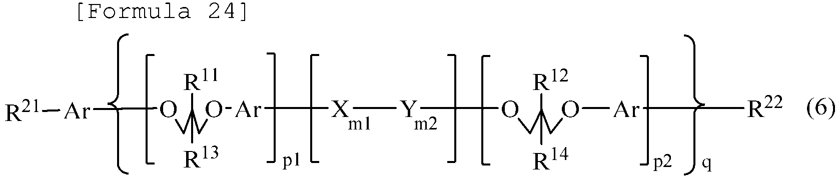
wherein each Ar is independently a structure having an aromatic ring unsubstituted or having a substituent;
X is a structural unit represented by the following general formula (6-1), and Y is a structural unit represented by the following general formula (6-2), 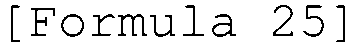 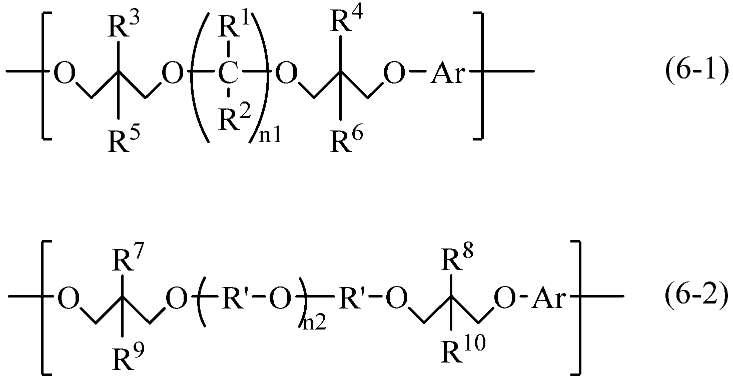
   wherein Ar is as defined above,
   R¹ and R² are each independently a hydrogen atom, a methyl group, or an ethyl group,
   R' is a divalent hydrocarbon group having 2 to 12 carbon atoms,
   R³, R⁴, R⁷, and R⁸ are each independently a hydroxyl group, a glycidyl ether group, or a 2-methylglycidyl ether group,
   R⁵, R⁶, R⁹, and R¹⁰ are each independently a hydrogen atom or a methyl group,
   n1 is an integer of 2 to 16,
   n2 is an average number of repeating units and 2 to 30;
   R²¹ and R²² are each independently a glycidyl ether group or a 2-methylglycidyl ether group;
   R¹¹ and R¹² are each independently a hydroxyl group, a glycidyl ether group, or a 2-methylglycidyl ether group;
   R¹³ and R¹⁴ are each a hydrogen atom or a methyl group;
   m1, m2, p1, p2, and q are each an average number of repetitions,
   where m1 and m2 are each independently 0 to 25 and m1 + m2 ≥ 1,
   p1 and p2 are each independently 0 to 5, and
   q is 0.5 to 5,
   provided that bonding between X represented by the general formula (6-1) and Y represented by the general formula (6-2) is optionally random or block, and total numbers of the structural units X and Y in one molecule are m1 and m2, respectively.

The epoxy resin represented by the general formula (6) may be combined alone to form a curable resin composition, but preferably is combined with an epoxy resin having an epoxy equivalent weight of 100 to 300 g/eq in order to impart more flexibility to the cured product and easily express ease of disassembly.

The epoxy resin that can be combined is any epoxy resin that has an epoxy equivalent weight in the range of 100 to 300 g/eq and its structure is not limited. Examples include liquid epoxy resins such as bisphenol A epoxy resin, bisphenol F epoxy resin, bisphenol S epoxy resin, bisphenol AD epoxy resin, polyhydroxybenzene epoxy resin, polyhydroxynaphthalene epoxy resin, biphenyl epoxy resin, and tetramethylbiphenyl epoxy resin, brominated epoxy resins such as brominated phenol novolac epoxy resins, solid bisphenol A epoxy resin, phenol novolac epoxy resin, cresol novolac epoxy resin, triphenylmethane epoxy resin, tetraphenylethane epoxy resin, dicyclopentadiene-phenol addition reaction-type epoxy resin, phenol aralkyl epoxy resin, phenylene ether epoxy resin, naphthylene ether epoxy resin, naphthol novolac epoxy resin, naphthol aralkyl epoxy resin, naphthol-phenol co-condensed novolac epoxy resin, naphthol-cresol co-condensed novolac epoxy resin, aromatic hydrocarbon formaldehyde resin-modified phenol resin epoxy resin, and biphenyl-modified novolac epoxy resin. These may be used alone or in combination of two or more. It is preferable to select and use various types according to the intended use and physical properties of the cured product.

Among these, an epoxy resin having an epoxy equivalent weight of 100 to 300 g/eq is preferred among liquid epoxy resins such as bisphenol A epoxy resin, bisphenol F epoxy resin, bisphenol S epoxy resin, bisphenol AD epoxy resin, polyhydroxybenzene epoxy resin, polyhydroxynaphthalene epoxy resin, biphenyl epoxy resin, and tetramethylbiphenyl epoxy resin. An epoxy resin having an epoxy equivalent weight of 100 to 300 g/eq is particularly preferred among bisphenol A epoxy resin, bisphenol F epoxy resin, bisphenol S epoxy resin, and bisphenol AD epoxy resin.

The ratio of the epoxy resin represented by the general formula (6) and the epoxy resin having an epoxy equivalent weight of 100 to 300 g/eq is not limited, but from the viewpoint of easy phase separation in the cured product, the mass ratio of the former to the latter is 97:3 to 3:97, preferably 10:90 to 90:10, and particularly preferably 80:20 to 20:80. The phase separation in the cured product results in a sea-island structure, whereby both adhesiveness and stress relaxation ability are achieved in the cured product, in particular, high adhesive strength is expressed in a wide temperature range, and mold shrinkage before and after heat curing of the resin composition is reduced.

The curable resin composition of the present invention may be used in combination with other thermosetting resins or thermoplastic resins as long as the effects of the present invention are not impaired.

Examples of other thermosetting resins include cyanate ester resins, resins having benzoxazine structures, active ester resins, vinyl benzyl compounds, acrylic compounds, and copolymers of styrene and maleic anhydride. When the other thermosetting resins described above are used in combination, the amount used is not limited as long as the effects of the present invention are not impaired, but preferably in the range of 1 to 50 parts by mass in 100 parts by mass of the curable resin composition.

Examples of the cyanate ester resins include bisphenol A cyanate ester resin, bisphenol F cyanate ester resin, bisphenol E cyanate ester resin, bisphenol S cyanate ester resin, bisphenol sulfide cyanate ester resin, phenylene ether cyanate ester resin, naphthylene ether cyanate ester resin, biphenyl cyanate ester resin, tetramethylbiphenyl cyanate ester resin, polyhydroxynaphthalene cyanate ester resin, phenol novolac cyanate ester resin, cresol novolac cyanate ester resin, triphenylmethane cyanate ester resin, tetraphenylethane cyanate ester resin, dicyclopentadiene-phenol addition reaction-type cyanate ester resin, phenol aralkyl cyanate ester resin, naphthol novolac cyanate ester resin, naphthol aralkyl cyanate ester resin, naphthol-phenol co-condensed novolac cyanate ester resin, naphthol-cresol co-condensed novolac cyanate ester resin, aromatic hydrocarbon formaldehyde resin-modified phenolic resin cyanate ester resin, biphenyl modified novolac cyanate ester resin, and anthracene cyanate ester resin. These may be each used alone, or two or more types thereof may be used in combination.

Among these cyanate ester resins, bisphenol A cyanate ester resin, bisphenol F cyanate ester resin, bisphenol E cyanate ester resin, polyhydroxynaphthalene cyanate ester resin, naphthylene ether cyanate ester resin, and novolac cyanate ester resin are preferred in order to obtain a cured product with excellent heat resistance. Dicyclopentadiene-phenol addition reaction-type cyanate ester resin is preferred in order to obtain a cured product with excellent dielectric properties.

Examples of the resins having benzoxazine structures include, but are not limited to, a reaction product of bisphenol F with formalin and aniline (F-a type benzoxazine resin), a reaction product of diaminodiphenylmethane with formalin and phenol (P-d type benzoxazine resin), a reaction product of bisphenol A with formalin and aniline, a reaction product of dihydroxydiphenyl ether with formalin and aniline, a reaction product of diaminodiphenyl ether with formalin and phenol, a reaction product of dicyclopentadiene phenol-added resin with formalin and aniline, a reaction product of phenolphthalein with formalin and aniline, and a reaction product of diphenyl sulfide with formalin and aniline. These may be each used alone, or two or more types thereof may be used in combination.

Preferred examples of the active ester resins that can be used generally include, but are not limited to, compounds having two or more ester groups with high reaction activity in one molecule, such as phenol esters, thiophenol esters, N-hydroxyamine esters, and esters of heterocyclic hydroxy compounds. The active ester resin is preferably an active ester resin obtained by a condensation reaction of a carboxylic acid compound and/or a thiocarboxylic acid compound with a hydroxy compound and/or a thiol compound. From the viewpoint of heat resistance improvement, an active ester resin obtained from a carboxylic acid compound or a halide thereof and a hydroxy compound is preferred. An active ester resin obtained from a carboxylic acid compound or a halide thereof and a phenol compound and/or a naphthol compound is more preferred. Examples of the carboxylic acid compound include benzoic acid, acetic acid, succinic acid, maleic acid, itaconic acid, phthalic acid, isophthalic acid, terephthalic acid, pyromellitic acid, and halides thereof. Examples of the phenol compound or the naphthol compound include hydroquinone, resorcin, bisphenol A, bisphenol F, bisphenol S, dihydroxydiphenyl ether, phenolphthalein, methylated bisphenol A, methylated bisphenol F, methylated bisphenol S, phenol, o-cresol, m-cresol, p-cresol, catechol, α-naphthol, β-naphthol, 1,5-dihydroxynaphthalene, 1,6-dihydroxynaphthalene, 2,6-dihydroxynaphthalene, dihydroxybenzophenone, trihydroxybenzophenone, tetrahydroxybenzophenone, phloroglucin, benzenetriol, and dicyclopentadiene phenol-added resin.

As the active ester resin, specifically, an active ester resin containing a dicyclopentadiene-phenol addition structure, an active ester resin containing a naphthalene structure, an active ester resin that is acetylated phenol novolac, an active ester resin that is a benzoylated phenol novolac, and the like are preferred. Among these, the active ester resin containing a dicyclopentadiene-phenol addition structure and the active ester resin containing a naphthalene structure are more preferred since they are excellent in improving peel strength.

Furthermore, various novolac resins, addition polymerization resins of alicyclic diene compounds such as dicyclopentadiene and phenol compounds, modified novolac resins of phenolic hydroxyl group-containing compounds and alkoxy group-containing aromatic compounds, phenol aralkyl resin (xylok resin), naphthol aralkyl resin, trimethylolmethane resin, tetraphenylolethane resin, biphenyl-modified phenol resin, biphenyl-modified naphthol resin, aminotriazine-modified phenol resin, and various vinyl polymers may be used in combination.

More specifically, examples of the various novolac resins include polymers obtained by reacting a phenolic hydroxyl group-containing compound such as phenol, phenylphenol, resorcinol, biphenyl, bisphenol such as bisphenol A and bisphenol F, naphthol, or dihydroxynaphthalene with an aldehyde compound under acid catalytic conditions.

Examples of the various vinyl polymers include homopolymers or copolymers of vinyl compounds such as polyhydroxystyrene, polystyrene, polyvinylnaphthalene, polyvinylanthracene, polyvinylcarbazole, polyindene, polyacenaphthylene, polynorbornene, polycyclodecene, polytetracyclododecene, polynortricyclene, and poly(meth)acrylate.

The thermoplastic resins are resins capable of melt-molding by heating. Specific examples of the thermoplastic resins include polyethylene resin, polypropylene resin, polystyrene resin, rubber-modified polystyrene resin, acrylonitrile-butadiene-styrene (ABS) resin, acrylonitrile-styrene (AS) resin, polymethyl methacrylate resin, acrylic resin, polyvinyl chloride resin, polyvinylidene chloride resin, polyethylene terephthalate resin, ethylene vinyl alcohol resin, cellulose acetate resin, ionomer resin, polyacrylonitrile resin, polyamide resin, polyacetal resin, polybutylene terephthalate resin, polylactic acid resin, polyphenylene ether resin, modified polyphenylene ether resin, polycarbonate resin, polysulfone resin, polyphenylene sulfide resin, polyetherimide resin, polyethersulfone resin, polyarylate resin, thermoplastic polyimide resin, polyamideimide resin, polyetheretherketone resin, polyketone resin, liquid crystal polyester resin, fluororesin, syndiotactic polystyrene resin, and cyclic polyolefin resin. These thermoplastic resins may be used alone or in combination of two or more.

When these other resins are used, the blending ratio of the curable compound of the present invention to the other resins can be set as desired according to the applications, but in order to prevent impairment of repairability and remoldability of the present invention, the proportion of the other resins is preferably 0.5 to 100 parts by mass per 100 parts by mass of the curable compound of the present invention.

The curable resin composition of the present invention may be used in combination with a curing accelerator. Examples of the curing accelerator include tertiary amine compounds such as imidazole and dimethylaminopyridine; phosphorus compounds such as triphenylphosphine; boron trifluoride and boron trifluoride amine complex such as boron trifluoride monoethylamine complex; organic acid compounds such as thiodipropionic acid; benzoxazine compounds such as thiodiphenol benzoxazine and sulfonyl benzoxazine; and sulfonyl compounds. These may be each used alone, or two or more types thereof may be used in combination. The amount of these catalysts added is preferably in the range of 0.001 to 15 parts by mass in 100 parts by mass of the curable resin composition.

When the curable resin composition of the present invention is used for applications that require high flame retardancy, a halogen free flame retardant substantially containing no halogen atom may be blended.

Examples of the halogen free flame retardant include a phosphorus-containing flame retardant, a nitrogen-containing flame retardant, a silicone-based flame retardant, an inorganic flame retardant, and an organic metal salt-based flame retardant. During use of the halogen free flame retardant, there are no limits. The halogen free flame retardant may be used alone, a plurality of halogen free flame retardants of the same type may be used, or halogen free flame retardants of different types may be used in combination.

As the phosphorus-containing flame retardant, an inorganic or organic phosphorus compound may be used. Examples of the inorganic phosphorus compound include red phosphorus, ammonium phosphates such as monoammonium phosphate, diammonium phosphate, triammonium phosphate, and ammonium polyphosphate, and inorganic nitrogen-containing phosphorus compounds such as phosphoric amide.

It is preferable that the red phosphorus be surface-treated to prevent hydrolysis and the like. Examples of a surface treatment method include (i) a method for performing a covering treatment with an inorganic compound such as magnesium hydroxide, aluminum hydroxide, zinc hydroxide, titanium hydroxide, bismuth oxide, bismuth hydroxide, bismuth nitrate, or a mixture thereof, (ii) a method for performing a covering treatment with a mixture of an inorganic compound such as magnesium hydroxide, aluminum hydroxide, zinc hydroxide, or titanium hydroxide, and a thermosetting resin such as a phenol resin, and (iii) a method for performing a two-stage covering treatment in which a coating of an inorganic compound such as magnesium hydroxide, aluminum hydroxide, zinc hydroxide, or titanium hydroxide is covered with a thermosetting resin such as a phenol resin.

Examples of the organic phosphorus compound include common organic phosphorus compounds such as a phosphoric acid ester compound, a phosphonic acid compound, a phosphinic acid compound, a phosphine oxide compound, a phosphorane compound, and an organic nitrogen-containing phosphorus compound, as well as cyclic organic phosphorus compounds such as 9,10-dihydro-9-oxa-10-phosphaphenanthrene-10-oxide, 10-(2,5-dihydroxyphenyl)-10H-9-oxa-10-phosphaphenanthrene-10-oxide, and 10-(2,7-dihydroxynaphthyl)-10H-9-oxa-10-phosphaphenanthrene-10-oxide, and derivatives thereof obtained by reacting these phosphorus compounds with compounds such as epoxy resins and phenol resins.

The amount of these phosphorus-containing flame retardants blended is appropriately selected depending on the type of the phosphorus-containing flame retardant, the other component of the resin composition, and a desired degree of flame retardancy. For example, when red phosphorus is used as a halogen free flame retardant, it is preferably blended in an amount of 0.1 to 2.0 parts by mass in 100 parts by mass of the resin composition in which the halogen free flame retardant, filler and other additives are all blended. When an organic phosphorus compound is used, it is preferably blended in an amount of 0.1 to 10.0 parts by mass similarly, more preferably in an amount of 0.5 to 6.0 parts by mass.

When the phosphorus-containing flame retardant is used, hydrotalcite, magnesium hydroxide, a boron compound, zirconium oxide, a black dye, calcium carbonate, zeolite, zinc molybdate, activated carbon, or the like may be used in combination with the phosphorus-containing flame retardant.

Examples of the nitrogen-containing flame retardant include a triazine compound, a cyanuric acid compound, an isocyanuric acid compound, and phenothiazine. The triazine compound, the cyanuric acid compound, and the isocyanuric acid compound are preferred.

Examples of the triazine compound include melamine, acetoguanamine, benzoguanamine, melon, melam, succinoguanamine, ethylenedimelamine, melamine polyphosphate, and triguanamine, as well as (1) an aminotriazine sulfate compound such as guanylmelamine sulfate, melem sulfate, and melam sulfate, (2) a co-condensed product of phenols such as phenol, cresol, xylenol, butylphenol, and nonylphenol with melamines such as melamine, benzoguanamine, acetoguanamine, and formoguanamine, and formaldehyde, (3) a mixture of the co-condensed product (2) and phenol resins such as phenol formaldehyde condensate, and (4) the co-condensed product (2) or the mixture (3) further modified with tung oil, isomerized linseed oil, or the like.

Examples of the cyanuric acid compound include cyanuric acid, and melamine cyanurate.

The amount of the nitrogen-containing flame retardant blended is appropriately selected depending on the type of the nitrogen-containing flame retardant, the other component of the resin composition, and a desired degree of flame retardancy. For example, the nitrogen-containing flame retardant is preferably blended in an amount of 0.05 to 10 parts by mass, and particularly preferably 0.1 to 5 parts by mass, in 100 parts by mass of the resin composition in which the halogen free flame retardant, filler and other additives are all blended.

When the nitrogen-containing flame retardant is used, a metal hydroxide, a molybdenum compound, or the like may be used in combination.

As the silicone-based flame retardant, an organic compound containing a silicon atom can be used without particular limitation. Examples thereof include a silicone oil, a silicone rubber, and a silicone resin. The amount of the silicone-based flame retardant blended is appropriately selected depending on the type of the silicone-based flame retardant, the other component of the resin composition, and a desired degree of flame retardancy. For example, the silicone-based flame retardant is preferably blended in an amount of 0.05 to 20 parts by mass in 100 parts by mass of the resin composition in which the halogen free flame retardant, filler and other additives are all blended. When the silicone-based flame retardant is used, a molybdenum compound, alumina, or the like may be used in combination.

Examples of the inorganic flame retardant include a metal hydroxide, a metal oxide, a metal carbonate compound, a metal powder, a boron compound, and a low-melting-point glass.

Examples of the metal hydroxide include aluminum hydroxide, magnesium hydroxide, dolomite, hydrotalcite, calcium hydroxide, barium hydroxide, and zirconium hydroxide.

Examples of the metal oxide include zinc molybdate, molybdenum trioxide, zinc stannate, tin oxide, aluminum oxide, iron oxide, titanium oxide, manganese oxide, zirconium oxide, zinc oxide, molybdenum oxide, cobalt oxide, bismuth oxide, chromium oxide, nickel oxide, copper oxide, and tungsten oxide.

Examples of the metal carbonate compound include zinc carbonate, magnesium carbonate, calcium carbonate, barium carbonate, basic magnesium carbonate, aluminum carbonate, iron carbonate, cobalt carbonate, and titanium carbonate.

Examples of the metal powder include aluminum, iron, titanium, manganese, zinc, molybdenum, cobalt, bismuth, chromium, nickel, copper, tungsten, and tin.

Examples of the boron compound include zinc borate, zinc metaborate, barium metaborate, boric acid, and borax.

Examples of the low-melting-point glass include CEEPREE (Bokusui Brown Co., Ltd), hydrated glass SiO₂-MgO-H₂O, and PbO-B₂O₃-based, ZnO-P₂O₅-MgO-based, P₂O₅-B₂O₃-PbO-MgO-based, P-Sn-O-F-based, PbO-V₂O₅-TeO₂-based, Al₂O₃-H₂O-based, and lead borosilicate-based glass compounds.

The amount of the inorganic flame retardant blended is appropriately selected depending on the type of the inorganic flame retardant, the other component of the resin composition, and a desired degree of flame retardancy. For example, the inorganic flame retardant is preferably blended in an amount of 0.05 to 20 parts by mass, and particularly preferably 0.5 to 15 parts by mass, in 100 parts by mass of the resin composition in which the halogen free flame retardant, filler and other additives are all blended.

Examples of the organic metal salt-based flame retardant include ferrocene, an acetylacetonate metal complex, an organic metal carbonyl compound, an organic cobalt salt compound, an organic sulfonic acid metal salt, and a compound in which a metal atom is ionically bonded or coordinately bonded to an aromatic compound or a heterocyclic compound.

The amount of the organic metal salt-based flame retardant blended is appropriately selected depending on the type of the organic metal salt-based flame retardant, the other component of the resin composition, and a desired degree of flame retardancy. For example, the organic metal salt-based flame retardant is preferably blended in an amount of 0.005 to 10 parts by mass in 100 parts by mass of the resin composition in which the halogen free flame retardant, filler and other additives are all blended.

The curable resin composition of the present invention may contain a filler. Examples of the filler include inorganic and organic fillers. Examples of the inorganic filler include inorganic fine particles.

Examples of the inorganic fine particles that are excellent in heat resistance include alumina, magnesia, titania, zirconia, silica (quartz, fumed silica, precipitated silica, anhydrous silica, fused silica, crystalline silica, ultra-fine amorphous silica, etc.). Examples of the inorganic fine particles that are excellent in thermal conductivity include boron nitride, aluminum nitride, aluminum oxide, titanium oxide, magnesium oxide, zinc oxide, silicon oxide, and diamond. Examples of the inorganic fine particles that are excellent in electrical conductivity include metal fillers and/or metal-coated fillers using metals or alloys (e.g., iron, copper, magnesium, aluminum, gold, silver, platinum, zinc, manganese, stainless steel, etc.). Examples of the inorganic fine particles that are excellent in barrier properties include minerals such as mica, clay, kaolin, talc, zeolite, wollastonite, and smectite, potassium titanate, magnesium sulfate, sepiolite, zonolite, aluminum borate, calcium carbonate, titanium oxide, barium sulfate, zinc oxide, and magnesium hydroxide. Examples of the inorganic fine particles that have high refractive index include barium titanate, zirconia oxide, and titanium oxide. Examples of the inorganic fine particles that exhibit photocatalytic properties include photocatalytic metals such as titanium, cerium, zinc, copper, aluminum, tin, indium, phosphorus, carbon, sulfur, ruthenium, nickel, iron, cobalt, silver, molybdenum, strontium, chromium, barium, and lead, complexes of the metals, and oxides thereof. Examples of the inorganic fine particles that are excellent in abrasion resistance include metals such as silica, alumina, zirconia, and magnesium oxide, and complexes and oxides thereof. Examples of the inorganic fine particles that are excellent in electrical conductivity include metals such as silver and copper, tin oxide, and indium oxide. Examples of the inorganic fine particles that are excellent in insulating properties include silica. Examples of the inorganic fine particles that are excellent in shielding of ultraviolet light include titanium oxide and zinc oxide. These inorganic fine particles may be appropriately selected according to use application. The inorganic fine particles may be used alone, or a combination of a plurality of types thereof may be used. Since the inorganic fine particles have various properties other than the properties exemplified, the inorganic fine particles may be appropriately selected according to use application.

For example, when silica is used as the inorganic fine particles, publicly known silica fine particles such as powdered silica or colloidal silica can be used without particular limitation. Examples of commercially available powdered silica fine particles include AEROSIL 50 and 200 available from NIPPON AEROSIL CO., LTD., Sildex H31, H32, H51, H52, H121, and H122 available from Asahi Glass Co., Ltd., E220A and E220 available from Nippon Silica Industrial Co., Ltd., SYLYSIA470 available from FUJI SILYSIA CHEMICAL LTD., and SG flake available from Nippon Sheet Glass Co., Ltd.

Examples of commercially available colloidal silica include methanol silica sol, IPA-ST, MEK-ST, NBA-ST, XBA-ST, DMAC-ST, ST-UP, ST-OUP, ST-20, ST-40, ST-C, ST-N, ST-O, ST-50, and ST-OL available from Nissan Chemical Corporation.

Surface-modified silica fine particles may be used. Examples thereof include those surface-treated with a reactive silane coupling agent having a hydrophobic group and those modified with a compound having a (meth)acryloyl group. Examples of commercially available powdered silica modified with a compound having a (meth)acryloyl group include AEROSIL RM50 and R711 available from NIPPON AEROSIL CO., LTD. Examples of commercially available colloidal silica modified with a compound having a (meth)acryloyl group include MIBK-SD available from Nissan Chemical Corporation.

The shape of the silica fine particles is not particularly limited. Spherical, hollow, porous, rod-shaped, plate-shaped, fibrous, or amorphous silica fine particles can be used. The primary particle size is preferably in the range of 5 to 200 nm.

As titanium oxide fine particles, not only an extender pigment but also ultraviolet light-responsive photocatalyst can be used. For example, anatase-type titanium oxide, rutile-type titanium oxide, brookite-type titanium oxide, or the like can be used. In addition, particles that are designed to respond to visible light by doping a crystal structure of titanium oxide with a heterologous element can be used. As an element with which titanium oxide is doped, an anionic element such as nitrogen, sulfur, carbon, fluorine, or phosphorus, or a cationic element such as chromium, iron, cobalt, or manganese is suitably used. As the state of titanium oxide, a powder, or a sol or a slurry in which titanium oxide is dispersed in an organic solvent or water can be used. Examples of commercially available powdered titanium oxide fine particles include AEROSIL P-25 available from NIPPON AEROSIL CO., LTD., and ATM-100 available from TAYCA CORPORATION. Examples of commercially available titanium oxide fine particles in a slurry state include TKD-701 available from TAYCA CORPORATION.

The curable resin composition of the present invention may further contain a fibrous matrix. The fibrous matrix is not limited, but those used for fiber-reinforced resins are preferred, and examples include inorganic and organic fibers.

Examples of the inorganic fibers include inorganic fibers such as carbon fiber, glass fiber, boron fiber, alumina fiber, and silicon carbide fiber, as well as carbon fiber, activated carbon fiber, graphite fiber, tungsten carbide fiber, silicon carbide fiber, ceramic fiber, natural fiber, mineral fiber such as basalt, boron nitride fiber, boron carbide fiber, and metallic fiber. Examples of the metallic fiber include aluminum fiber, copper fiber, brass fiber, stainless steel fiber, and steel fiber.

Examples of the organic fibers include synthetic fibers made of resin materials such as polybenzazole, aramid, PBO (polyparaphenylenebenzoxazole), polyphenylene sulfide, polyester, acrylic, polyamide, polyolefin, polyvinyl alcohol, and polyarylate, natural fibers such as cellulose, pulp, cotton, wool, and silk, and regenerated fibers such as protein, polypeptide, and alginic acid.

Among these, carbon fiber and glass fiber are preferred because of their wide range of industrial applications. Only one of these types may be used, or multiple types may be used simultaneously.

The fibrous matrix may be an aggregate of fibers, and the fibers may be continuous or discontinuous, and may be woven or non-woven. The fibrous matrix may be a fiber bundle in which fibers are aligned in one direction, or a sheet of fiber bundles. The fibrous matrix may have a three-dimensional shape in which the aggregate of fibers has a thickness.

In order to adjust the solid content and the viscosity of the resin composition, a dispersion medium may be used in the curable resin composition of the present invention. The dispersion medium is not limited as long as it is a liquid dispersion medium that does not impair the effects of the present invention. Examples thereof include various organic solvents and liquid organic polymers.

Examples of the organic solvent include ketones such as acetone, methyl ethyl ketone (MEK), and methyl isobutyl ketone (MIBK), cyclic ethers such as tetrahydrofuran (THF) and dioxolane, esters such as methyl acetate, ethyl acetate, and butyl acetate, aromatic compounds such as toluene and xylene, alcohols such as carbitol, cellosolve, methanol, isopropanol, butanol, and propylene glycol monomethyl ether. The organic solvents may be used alone or in combination. Among these, methyl ethyl ketone is preferred in terms of volatility during coating and solvent recovery.

The liquid organic polymer is a liquid organic polymer that does not contribute directly to a curing reaction. Examples thereof include an acrylic polymer (FLOWLEN WK-20: Kyoeisha Chemical Co., Ltd.), an amine salt of specialized modified phosphate (HIPLAAD ED-251: Kusumoto Chemicals, Ltd.), and a modified acrylic block copolymer

### (DISPERBYK2000: BYK).

The resin composition of the present invention may contain other additives. Examples include catalyst, polymerization initiator, inorganic pigment, organic pigment, extender pigment, clay mineral, wax, surfactant, stabilizer, flowing adjuster, coupling agent, dye, leveling agent, rheology control agent, UV absorber, antioxidant, flame retardant, plasticizer, and reactive diluent.

The resin composition of the present invention may be cured to obtain a cured product. The curing can be performed at normal temperature or by heating. When thermal curing is performed, the resin composition may be cured in a single heating step or may be cured through a multi-step heating process.

The curable resin composition of the present invention can be cured with active energy rays. In this case, a photo-cationic polymerization initiator may be used as a polymerization initiator. Visible light, ultraviolet rays, X-rays, electron beams, and the like can be used as the active energy rays.

Examples of the photo-cationic polymerization initiator that can be used include aryl-sulfonium salts and aryl-iodonium salts. Specific examples include arylsulfonium hexafluorophosphate, arylsulfonium hexafluoroanthimonate, arylsulfonium tetrakis(pentafluoro)borate salt, and tri(alkylphenyl)sulfonium hexafluorophosphate. The photo-cationic polymerization initiator may be used alone, or two or more types thereof may be used in combination.

The curable resin composition of the present invention is obtained by uniformly mixing the components described above, and the mixing method is not limited. For example, the curable resin composition of the present invention can be prepared by uniformly mixing using a pot mill, a ball mill, a bead mill, a roll mill, a homogenizer, a super mill, a homo disper, a utility mixer, a Banbury mixer, a kneader, or the like.

The curable resin composition of the present invention is prepared by dissolving the curable compound described above, the compound (III) reactive with the curable compound, and, if necessary, the curing agent, filler, fibrous matrix, dispersion medium, and resins other than the various compounds described above in the dispersion medium such as an organic solvent described above. After dissolution, the solvent is distilled off and the curable resin composition can be obtained by drying under reduced pressure in a vacuum oven or the like. The curable resin composition of the present invention may be a homogeneous mixture of the above constituent materials. In this case, it is preferable to mix the constituent materials uniformly in a mixer or the like. The ratio of each constituent material blended can be adjusted as appropriate according to desired properties such as mechanical strength, heat resistance, repairability, and remoldability of the cured product. In preparation of the curable resin composition, the order of mixing specific constituent materials is not particularly limited.

The cured product of the present invention is made by curing the curable resin composition of the present invention. As a curing method, a known method can be selected and employed as appropriate depending on the properties of the composition to be used.

The cured product of the present invention can maintain good mechanical strength by expressing moderate crosslink density as described above. When the cured product of the present invention is subjected to mechanical energy, such as scratches or external force, the reversible bond is broken, thereby expressing ease of disassembly. Furthermore, since equilibrium shifts in the bonding direction, an adduct is formed again, which enables damage repair and remolding.

The structure of the resulting cured product can be determined by infrared absorption (IR) spectroscopy using Fourier transform infrared spectroscopy (FT-IR) or the like, elemental analysis, X-ray scattering, or the like.

The curable resin composition of the present invention and the cured product produced from the curable resin composition are excellent in both ease of disassembly and repairability and have remoldability, and are useful for the following applications.

The curable resin cured product of the present invention can be laminated with a substrate to form a laminate. As the substrate of the laminate, an inorganic material such as metal or glass, an organic material such as plastic or wood, or the like can be used as appropriate depending on the application. The substrate can be in the form of a laminate, or may be a flat plate, a sheet, or may have a three-dimensional structure, or may have a three-dimensional shape. The substrate may be of any shape according to the purpose, for example, a shape having curvature on all or part of the surface. The hardness, thickness, and the like of the substrate are not limited. The substrate may be a multilayer laminate including a first substrate, a layer of the cured product of the curable resin composition of the present invention, and a second substrate in sequence. Since the curable resin composition of the present embodiment has excellent adhesiveness, it can be suitably used as an adhesive to bond the first substrate and the second substrate. The curable resin cured product of the present invention may be used as a substrate with which the cured product of the present invention may be further laminated.

In addition, the curable resin cured product of the present invention is particularly suitable for adhesion between different kinds of materials because of its ability to relax stress. For example, even in a laminate of different types of materials, such as a substrate of metal and/or metal oxide and a second substrate of a plastic layer, the adhesive strength is maintained due to the stress relaxation ability of the cured product of the present invention.

In the laminate made by laminating the cured product of the present invention and the substrate, a layer containing the cured product may be formed by applying or molding directly onto the substrate, or a layer already molded may be laminated. In the case of directly applying, examples of the applying method include, but are not particularly limited, a spraying method, a spin coating method, a dip method, a roll-coating method, a blade coating method, a doctor roll method, a doctor blade method, a curtain coating method, a slit coating method, a screen printing method, and an inkjet method. In the case of directly molding, examples include in-mold molding, insert molding, vacuum molding, extrusion laminate molding, and press molding. When laminating the molded composition, an uncured or semi-cured composition layer may be laminated and then cured, or a layer containing a cured product in which the composition is fully cured may be laminated on the substrate. A precursor that can be a substrate may be applied to the cured product of the present invention and cured to form a laminate, or a precursor that can be a substrate or the composition of the present invention may be bonded in an uncured or semi-cured state and then cured. The precursor that can be a substrate is not limited, and examples include various curable resin compositions.

The cured product obtained using the curable resin composition of the present invention has particularly high adhesiveness to metals and/or metal oxides and can be used particularly well as a primer for metals. Examples of the metals include copper, aluminum, gold, silver, iron, platinum, chromium, nickel, tin, titanium, zinc, various alloys, and composite materials of these metals. Examples of the metal oxides include oxides and/or composite oxides of these metals. In particular, the cured product of the present invention has excellent adhesive strength to iron, copper, and aluminum, and can be used well as an adhesive for iron, copper, and aluminum.

The curable resin composition of the present invention can be suitably used as an adhesive for a structural member in the fields of automobiles, electric trains, civil engineering and construction, electronics, airplanes, and aerospace industry. For example, even when the adhesive is used in adhesion between different materials such as a metal and a non-metal, high adhesiveness can be maintained without being affected by a change in temperature environment, and peeling is unlikely to occur. The adhesive can be used as an adhesive for general office use, a medical adhesive, an adhesive for carbon fibers, or an adhesive for battery cell modules or cases, in addition to the adhesive for a structural member. The adhesive can be used as an adhesive for bonding of an optical component, an adhesive for bonding of an optical disk, an adhesive for mounting of a printed wiring board, a die bonding adhesive, an adhesive for semiconductor such as an underfill material, and an adhesive for mounting such as an underfill material for BGA reinforcement, an anisotropic conductive film, and an anisotropic conductive paste.

When the curable resin composition of the present invention has a fibrous matrix and the fibrous matrix is a reinforcing fiber, the curable resin composition containing the fibrous matrix can be used as a fiber-reinforced resin. The fibrous matrix can be included in the composition by any method as long as the effects of the present invention are not impaired. For example, the fibrous matrix and the composition are composited by a method such as kneading, coating, impregnation, injection, or pressure bonding. The method can be selected as appropriate depending on the form of fibers and the application of the fiber reinforced resin.

The fiber-reinforced resin may be molded by any method. When a plate-shaped product is produced, extrusion molding is common but flat pressing may be employed. In addition, extrusion molding, blow molding, compression molding, vacuum molding, injection molding, or the like can be used. When a film-shaped product is produced, melt extrusion as well as solution casting can be used. When melt molding is used, examples include film blown extrusion, casting, extrusion lamination, calendering, sheet molding, fiber molding, blow molding, injection molding, rotational molding, and coating molding. In the case of a resin that is cured with active energy rays, the cured product can be produced using various curing methods using active energy rays. In particular, when a thermosetting resin is used as the main component of a matrix resin, exemplary molding methods include a method in which a molding material pre-impregnated is pressed and heated by a press or an autoclave, as well as resin transfer molding (RTM), vacuum assist resin transfer molding (VaRTM), laminate molding, and hand layup molding.

The cured product of the curable resin composition of the present invention has good heat resistance and good repairability, and has remoldability, and thus can be used as a molding material for large cases, motor housings, cast-molded materials inside cases, gears and pulleys, and the like. These may be cured products of the resin alone or may be cured products reinforced with fibers such as glass chips.

The fiber-reinforced resin can form a state called uncured or semi-cured prepreg. After a product in a prepreg state is distributed, final curing may be performed to form a cured product. When a laminate is formed, it is preferable to form a prepreg and then laminate other layers before final curing to form a laminate in which each layer adheres to each other. The mass ratio of the composition and the fibrous matrix used in this case is not particularly limited. It is preferable that the prepreg be prepared such that the ratio of the resin in the prepreg is generally 20 to 60% by mass.

The cured product of the present invention has good heat resistance and good repairability, and has remoldability, and can be used as a heat resistant material and electronic material. In particular, the cured product of the present invention is suitable for semiconductor sealing materials, circuit boards, build-up films, and build-up substrates, as well as adhesives and resist materials. It is also suitable for a matrix resin for fiber-reinforced resins, and is particularly suitable as a prepreg with high heat resistance. Heat-resistant members and electronic members thus obtained can be suitably used in various applications. Examples of the applications include, but are not limited to, industrial machine parts, general machine parts, parts for automobiles, railroads, vehicles, and the like, space and aviation-related parts, electronic and electrical parts, construction materials, containers and packaging members, household goods, sports and leisure goods, and housing parts for wind power generation.

In particular, the cured product can be suitably used as an adhesive for a structural member in the fields of automobiles, electric trains, civil engineering and construction, electronics, airplanes, and aerospace industry by using characteristics including excellent flexibility of the cured product. For example, even when an adhesive of the present invention is used in adhesion between different materials such as a metal and a non-metal, high adhesiveness can be maintained without being affected by a change in temperature environment, and peeling is unlikely to occur. The adhesive of the present invention can be used as an adhesive for general office use, a medical adhesive, an adhesive for carbon fibers, or an adhesive for battery cells, modules, and cases, in addition to the adhesive for a structural member. Examples of the adhesive include an adhesive for bonding of an optical component, an adhesive for bonding of an optical disk, an adhesive for mounting of a printed wiring board, a die bonding adhesive, an adhesive for semiconductor such as an underfill material, and an adhesive for mounting such as an underfill material for BGA reinforcement, an anisotropic conductive film, and an anisotropic conductive paste.

Examples of typical products will be described below.

### 1. Semiconductor Sealing Material

Examples of a method for preparing a semiconductor sealing material from the resin composition of the present invention include a method in which the resin composition, and a compounding agent such as the curing accelerator and the inorganic filler are sufficiently melt-mixed using an extruder, a kneader, a roll, or the like, if necessary, until the components are homogeneous. In this case, as the inorganic filler, molten silica is generally used. When the molten silica is used as a high thermal conductive semiconductor sealing material for a power transistor or a power IC, filling of crystalline silica, alumina, or silicon nitride having higher thermal conductivity than molten silica may be increased, or molten silica, crystalline silica, alumina, silicon nitride, or the like may be used. The inorganic filler is used preferably at a filling rate of 30 to 95% by mass, and in terms of improving flame retardancy, moisture resistance, and resistance to solder cracking, and decreasing a linear expansion coefficient, more preferably 70 parts by mass or more, and even more preferably 80 parts by mass or more, relative to 100 parts by mass of the curable resin composition.

### 2. Semiconductor Device

Examples of semiconductor packaging for preparing a semiconductor device from the curable resin composition of the present invention include a method in which the semiconductor sealing material is cast or molded with a transfer molding machine, an injection molding machine, or the like and then heated at 50 to 250°C for 2 to 10 hours.

### 3. Printed Circuit Board

Examples of a method for preparing a printed circuit board from the composition of the present invention include a method in which the prepreg is layered by an ordinary method, copper foil is appropriately overlaid, and they are thermally compression-bonded under a pressure of 1 to 10 MPa at 170 to 300°C for 10 minutes to 3 hours.

### 4. Flexible Substrate

Examples of a method for producing a flexible substrate from the crosslinkable resin composition of the present invention include a production method including three steps described below. A first step is a step of applying a crosslinkable resin composition containing a resin component, an organic solvent, and the like to an electrically insulating film using a coater such as a reverse roll coater, or a comma coater; a second step is a step of heating the electrically insulating film having the applied crosslinkable resin composition at 60 to 170°C for 1 to 15 minutes using a heater and volatilizing the solvent from the electrically insulating film, to obtain the crosslinkable resin composition in a B-stage state; and a third step is a step of thermocompression-bonding the electrically insulating film having the crosslinkable resin composition in the B-stage state with metal foil through an adhesive using a heating roll or the like (a thermocompression-bonding pressure is preferably 2 to 200 N/cm, and a thermocompression-bonding temperature is preferably 40 to 200°C). If sufficient adhesion performance is achieved through the three steps, the operation may be completed. If complete adhesion performance is required, post-curing under conditions of 100 to 200°C and 1 to 24 hours is preferably further performed. The thickness of a finally cured layer of the resin composition is preferably within the range of 5 to 100 µm.

### 5. Build-Up Substrate

A method for preparing a build-up substrate from the composition of the present invention includes, for example, the following steps. First, the above composition containing a rubber, a filler, and the like as appropriate is applied to a circuit board having circuitry using spray coating, curtain coating, or the like and then cured (step 1). Then, after drilling the circuit board to form a predetermined through hole section as required, the circuit board is treated with a roughening agent, and the surface is washed with hot water to form irregularities and then plated with a metal such as copper (step 2). These operations are repeated sequentially as desired so that a resin insulating layer and a conductor layer with a predetermined circuit pattern are alternately built up (step 3). The drilling for the through hole section is performed after formation of an outermost resin insulating layer. The build-up substrate of the present invention can also be produced by thermally compression-bonding a copper foil with a resin that is obtained by semi-curing the resin composition on the copper foil on a wiring substrate having a circuit at 170 to 300°C without forming a roughened surface and a plating treatment.

### 6. Build-Up Film

As a method for preparing a build-up film from the composition of the present invention, the composition is applied to a surface of a support film (Y) as a substrate, and an organic solvent is dried by heating, blowing hot air, or the like, to form a composition layer (X).

Preferred examples of the organic solvent used herein include ketones such as acetone, methyl ethyl ketone, and cyclohexanone; acetic esters such as ethyl acetate, butyl acetate, cellosolve acetate, propylene glycol monomethyl ether acetate, and carbitol acetate; carbitols such as cellosolve and butyl carbitol; aromatic hydrocarbons such as toluene and xylene, dimethylformamide, dimethylacetamide, and N-methylpyrrolidone. The organic solvent is preferably used at such a ratio that the nonvolatile content is 30 to 60% by mass.

In general, the thickness of the formed layer (X) is equal to or more than the thickness of the conductor layer. Since the thickness of the conductor layer in the circuit board is generally within the range of 5 to 70 µm, the thickness of the resin composition layer is preferably within the range of 10 to 100 µm. The composition layer (X) in the present invention may be protected by a protective film described below. Protection by the protective film can prevent a surface of the resin composition layer from suffering attachment of contaminants or the like or from being scratched.

Examples of the support film and the protective film include polyolefins such as a polyethylene, a polypropylene, and a polyvinyl chloride, polyesters such as a polyethylene terephthalate (hereinafter also referred to as "PET") and a polyethylene naphthalate, polycarbonates, polyimides, a release paper, and metal foils such as a copper foil and an aluminum foil. The support film and the protective film may be subjected to matting and corona treatment as well as releasing treatment. The thickness of the support film is not particularly limited, and the support film generally having a thickness of the range of 10 to 150 µm, and preferably 25 to 50 µm is used. The thickness of the protective film is preferably 1 to 40 µm.

The support film (Y) is peeled after lamination on the circuit board or formation of an insulating layer by heating and curing. When the curable resin composition layer that constitutes the build-up film is heated and cured and the support film (Y) is then peeled, attachment of contaminants or the like at a curing step can be prevented. When the support film is peeled after curing, the support film is generally subjected to a releasing treatment in advance.

A multilayered printed wiring board can also be produced by using the build-up film obtained as described above. For example, if the layer (X) is protected by the protective film, the layer (X) and the protective film are peeled, and then the layer (X) is laminated directly in contact with a surface or both surfaces of the circuit board, for example, by a vacuum lamination method. The lamination method may be in a batch mode or a continuous mode with rolls. Before lamination, the build-up film and the circuit board may be heated (preheated), if necessary. The lamination is preferably performed under a lamination condition of a compression-bonding temperature (lamination temperature) of 70 to 140°C, a compression-bonding pressure of 1 to 11 kgf/cm2 (9.8×10⁴ to 107.9×10⁴ N/m²), and a reduced pressure of air pressure of 20 mm Hg (26.7 hPa) or less.

### 7. Conductive paste

Examples of a method for preparing conductive paste from the composition of the present invention include a method in which conductive particles are dispersed in the composition. The conductive paste can be a paste resin composition for circuit connection or an anisotropic conductive adhesive, depending on the type of conductive particles used.

### Examples

The present invention will now be specifically described using examples and comparative examples. Unless otherwise specified, "part(s)" and "%" in the following description are based on mass. The present invention is not limited to these examples.

¹H and ¹³C-NMR, FD-MS spectra, and GPC were measured under the following conditions.
¹H-NMR: "JNM-ECA600" from JEOL RESONANCE
Magnetic field intensity: 600 MHz
Integration count: 32 times
Solvent : DMSO-d₆
Sample concentration: 30% by mass
¹³C-NMR: "JNM-ECA600" from JEOL RESONANCE
Magnetic field intensity: 150 MHz
Integration count: 320 times
Solvent : DMSO-d₆
Sample concentration: 30% by mass
FD-MS: "JMS-T100GC AccuTOF" from JEOL Ltd.
Measurement range: m/z = 50.00 to 2000.00 Change rate: 25.6 mA/min
Final electric current: 40 mA
Cathode voltage: -10 kV
GPC: "HLC-8320GPC" from Tosoh Corporation
Columns: "TSK-GEL G2000HXL" + "TSK-GEL G3000HXL" + "TSK-GEL G4000HXL" from Tosoh Corporation
Detector: RI (differential refractometer)
Measuring conditions: 40°C
Mobile phase: tetrahydrofuran
Flow rate: 1 ml/min
Standard: "PStQuick A", "PStQuick B", "PStQuick E", "PStQuick F" from Tosoh Corporation

The epoxy equivalent weight of the synthesized epoxy resin was measured in accordance with JIS K7236, and the epoxy equivalent weight (g/eq) was calculated.

Examples of the method for calculating the number of repeating units include GPC molecular weight measurement or calculation from the results of various appropriate instrumental analyses such as FD-MS and NMR.

### Synthesis Example 1

In a flask equipped with a thermometer, a condenser, and a stirrer, 420 g (2.0 equivalents) of a diglycidyl ether of 1,12-dodecanediol (available from Yokkaichi Chemical Company Limited: epoxy equivalent 210 g/eq) and 456 g (4.0 equivalents) of bisphenol A (hydroxyl equivalent 114 g/eq) were charged. After the temperature was raised to 140°C for 30 minutes, 4.0 g of 4% sodium hydroxide solution was charged. The temperature was then raised to 150°C for 30 minutes, and a reaction was allowed to further proceed at 150°C for 6 hours. A neutralizing amount of sodium phosphate was then added to obtain 858 g of a hydroxy compound (Ph-1). The hydroxy compound (Ph-1) was confirmed to contain the target hydroxy compound because the mass spectrum showed a peak of M+ = 771 corresponding to the theoretical structure of m = 1 in the following structural formula (Ph-1). The hydroxy compound (Ph-1) had a hydroxyl equivalent weight of 388 g/eq as calculated from GPC, and the average number of repeating units m was 0.8.

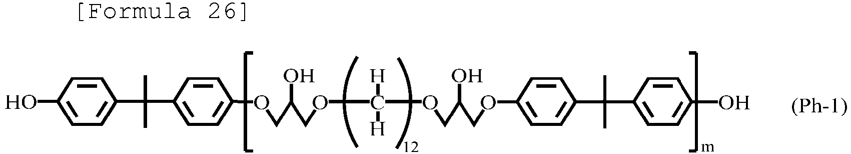

### Synthesis Example 2

A reaction was carried out in the same manner as in Synthesis Example 1 except that 420 g (2.0 equivalents) of the diglycidyl ether of 1,12-dodecanediol (epoxy equivalent 210 g/eq) in Synthesis Example 1 was replaced with 962 g (2.0 equivalents) of a diglycidyl ether of polypropylene glycol ("DENACOL EX-931" from Nagase ChemteX: epoxy equivalent 481 g/eq) to obtain 1390 g of a hydroxy compound (Ph-2). The hydroxy compound (Ph-2) was confirmed to contain the target hydroxy compound because the mass spectrum showed a peak of M+ = 1225 corresponding to the theoretical structure of m = 1 and n2 = 10 in the following structural formula (Ph-2). The hydroxy compound (Ph-2) had a hydroxyl equivalent weight of 593 g/eq as calculated from GPC, and the average number of repeating units m was 0.8.

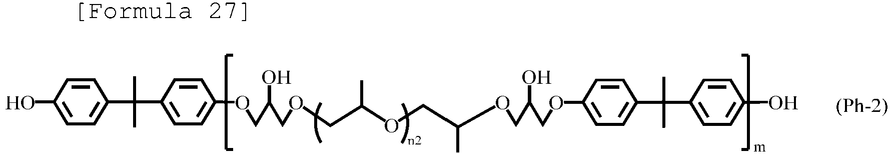

### Synthesis Example 3

In a flask equipped with a thermometer, a dropping funnel, a condenser, and a stirrer, 388 g of the hydroxy compound (Ph-1) obtained in Synthesis Example 1 (hydroxyl equivalent 388 g/eq), 1110 g (12.0 mol) of epichlorohydrin, and 300 g of n-butanol were added and allowed to dissolve under nitrogen gas purge. The temperature was then raised to 65°C, and the pressure was reduced to a pressure in which azeotropy occurred. 122.4g (1.5 mol) of 49% sodium hydroxide solution was added dropwise over 5 hours.

Subsequently, stirring was continued under the same condition for 0.5 hour. During the reaction, the distillate that was distilled out by azeotropy was separated with a Dean Stark trap, and a water layer was removed while an oil layer was returned to the reaction system. The unreacted epichlorohydrin was then removed by vacuum distillation. To the resultant crude epoxy resin, 1000 g of methyl isobutyl ketone and 110 g of n-butanol were added and allowed to dissolve.

To this solution, 20.0 g of 10% sodium hydroxide solution was added, and a reaction was allowed to proceed at 80°C for 2 hours. The resultant was then washed with 300 g of water three times until the pH of the washing liquid was neutral.

Subsequently, the system was dehydrated by azeotropy, microfiltration was performed, and the solvent was removed under reduced pressure, to obtain 399 g of an epoxy compound (Ep-1). The obtained epoxy compound (Ep-1) had an epoxy equivalent weight of 488 g/eq. The epoxy resin was confirmed to contain the target epoxy compound (Ep-1) because the mass spectrum showed a peak of M+ = 883 corresponding to the theoretical structure of m = 1, q = 1, p₁ = 0, and p₂ = 0 in the following structural formula (Ep-1). The obtained epoxy compound (Ep-1) contained a compound with q = 0. GPC confirmed that the mixture contained 20.5% of the compound with q = 0, and the average number of repeating units q was 0.8.

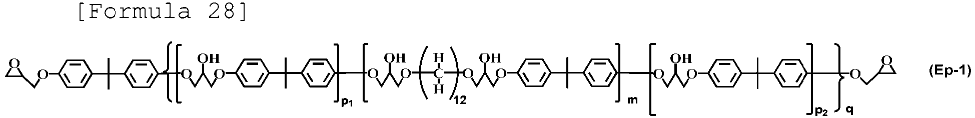

### Synthesis Example 4

A reaction was carried out in the same manner as in Synthesis Example 4 except that 388 g of the hydroxy compound (Ph-1) (hydroxyl equivalent 388 g/eq) in Synthesis Example 3 was replaced with 593 g of the hydroxy compound (Ph-2) (hydroxyl equivalent 593 g/eq) to obtain 584 g of an epoxy compound (Ep-2). The obtained epoxy compound (Ep-2) had an epoxy equivalent weight of 714 g/eq. The epoxy compound was confirmed to contain the target epoxy compound (Ep-2) because the mass spectrum showed a peak of M+ = 1336 corresponding to the theoretical structure of m = 1, n2 = 10, q = 1, p1 = 0, and p2 = 0 in the following structural formula (Ep-2). The obtained epoxy compound (Ep-2) contained a compound with q = 0. GPC confirmed that the mixture contained 16.8% of the compound with q = 0, and the average number of repeating units q was 0.8.

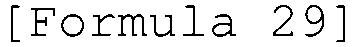

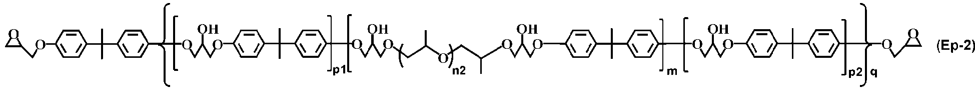

### Synthesis Example 5

An epoxy compound (Ep-3) was synthesized according to the method described in the literature of J. Network Polym., Jpn., Vol. 29, 208; 2008. The obtained epoxy compound (Ep-3) had an epoxy equivalent weight of 450 g/eq.

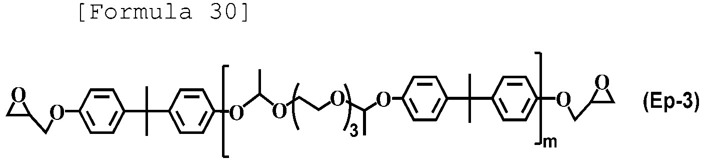

### Synthesis Example 6

In a flask equipped with a thermometer, a condenser, and a stirrer, 840 g (4.0 equivalents) of a diglycidyl ether of 1,12-dodecanediol (available from Yokkaichi Chemical Company Limited: epoxy equivalent 210 g/eq) and 228 g (2.0 equivalents) of bisphenol A (hydroxyl equivalent 114 g/eq) were charged. After the temperature was raised to 140°C for 30 minutes, 4.0 g of 4% sodium hydroxide solution was charged. The temperature was then raised to 150°C for 30 minutes, and a reaction was allowed to further proceed at 150°C for 6 hours. A neutralizing amount of sodium phosphate was then added to obtain 1047 g of an epoxy compound (Ep-4). The epoxy compound (Ep-4) was confirmed to contain the target epoxy compound because the mass spectrum showed a peak of M+ = 856 corresponding to the theoretical structure of m = 1 in the following structural formula (Ep-4). The epoxy compound (Ep-4) had an epoxy equivalent weight of 415 g/eq and the average number of repeating units m was 0.8.

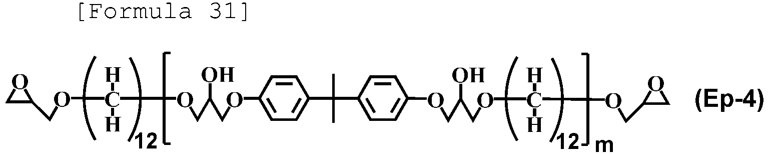

### Synthesis Example 7

A reaction was carried out in the same manner as in Synthesis Example 6 except that 840 g (4.0 equivalents) of the diglycidyl ether of 1,12-dodecanediol (available from Yokkaichi Chemical Company Limited: epoxy equivalent 210 g/eq) in Synthesis Example 6 was replaced with 1924 g (4.0 equivalents) of a diglycidyl ether of polypropylene glycol ("DENACOL EX-931" from Nagase ChemteX: epoxy equivalent 481 g/eq) to obtain 2109 g of an epoxy compound (Ep-5). The epoxy compound (Ep-5) was confirmed to contain the target epoxy compound because the mass spectrum showed a peak of M+ = 1764 corresponding to the theoretical structure of m = 1 and n2 = 10 in the following structural formula (Ep-5). The epoxy compound (Ep-5) had an epoxy equivalent weight of 973 g/eq and the average number of repeating units m was 0.8.

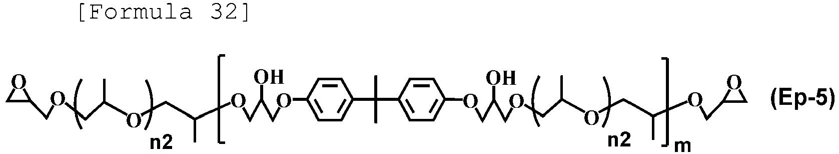

### Synthesis Example 8

To a flask equipped with a thermometer, a dropping funnel, a condenser, and a stirrer, 18.8 g (epoxy equivalent 188 g/eq) of bisphenol A liquid epoxy resin "E-850S" (from DIC Corporation) and 19.6 g (0.2 mol) of furfuryl alcohol were added and allowed to dissolve under nitrogen gas purge. Then, 0.7 g (0.007 mol) of triethylamine was added, the temperature was raised to 70°C for 30 minutes, and a reaction was allowed to further proceed at 70°C for 9 hours. The temperature was then raised to 150°C, and excess furfuryl alcohol was distilled off under reduced pressure to obtain 26 g of a furan compound (F-1). The molecular weight per mol of the furan structure calculated from ¹H-NMR of this furan compound (F-1) was 286 g/eq. The obtained furan compound (F-1) contained a compound with m = 0. GPC confirmed that the mixture contained 66.1% of the compound with m = 0, and the average number of repeating units p1 was 0.1.

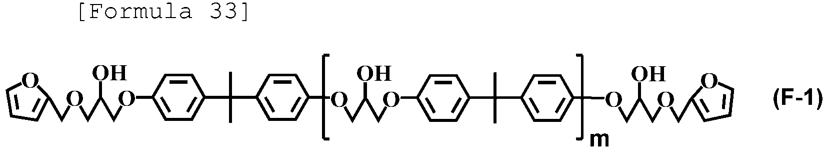

### Example 1

In a flask equipped with a thermometer and a condenser, 48.8 g (epoxy equivalent 488 g/eq) of the epoxy compound (Ep-1) obtained in Synthesis Example 3 and 4.7 g (0.025 mol) of N-(4-aminophenylmaleimide) (Tokyo Chemical Industry Co., Ltd.) were charged. After the temperature was raised to 140°C for 90 minutes, a reaction was allowed to further proceed at 140°C for 20 hours to obtain 48.2 g of a maleimide compound (M-1). The obtained maleimide compound (M-1) had an epoxy equivalent weight of 1049 g/eq. This maleimide compound (M-1) was confirmed to contain the target maleimide compound (M-1) because the mass spectrum showed a peak of M+ = 1952 corresponding to the theoretical structure of m = 1 and n = 1 in the following structural formula (M-1).

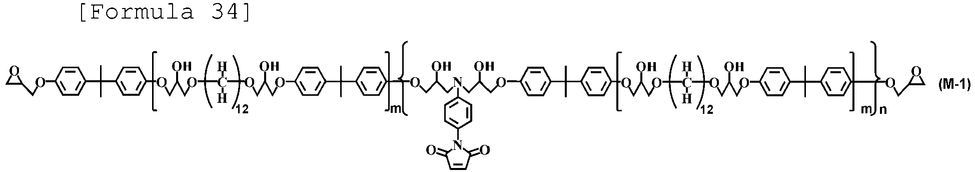

### Example 2

A reaction was carried out in the same manner as in Example 1 except that 48.8 g of the epoxy compound (Ep-1) (epoxy equivalent 488 g/eq) in Example 1 was replaced with 71.4 g of the epoxy compound (Ep-2) (epoxy equivalent 714 g/eq) to obtain 68.5 g of a maleimide compound (M-2). The obtained maleimide compound (M-2) had an epoxy equivalent weight of 1492 g/eq.

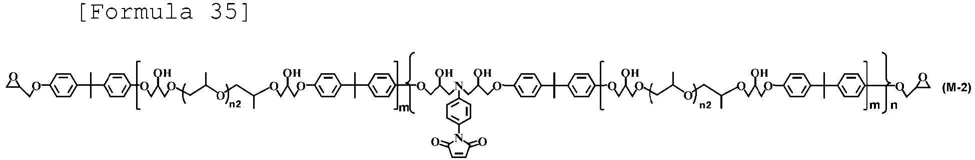

### Example 3

A reaction was carried out in the same manner as in Example 1 except that 48.8 g of the epoxy compound (Ep-1) (epoxy equivalent 488 g/eq) in Example 1 was replaced with 45.0 g of the epoxy compound (Ep-3) (epoxy equivalent 450 g/eq) to obtain 44.7 g of a maleimide compound (M-3). The obtained maleimide compound (M-3) had an epoxy equivalent weight of 974 g/eq. This maleimide compound (M-3) was confirmed to contain the target maleimide compound (M-3) because the mass spectrum showed a peak of M+ = 1728 corresponding to the theoretical structure of m = 1 and n = 1 in the following structural formula (M-3).

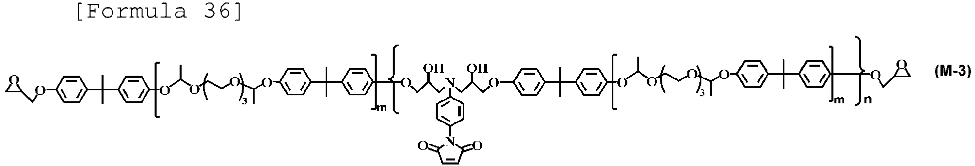

### Example 4

A reaction was carried out in the same manner as in Example 1 except that 48.8 g of the epoxy compound (Ep-1) (epoxy equivalent 488 g/eq) in Example 1 was replaced with 21.0 g of a diglycidyl ether of 1,12-dodecanediol (available from Yokkaichi Chemical Company Limited: epoxy equivalent 210 g/eq) to obtain 23.1 g of a maleimide compound (M-4). The obtained maleimide compound (M-4) had an epoxy equivalent weight of 504 g/eq. This maleimide compound (M-4) was confirmed to contain the target maleimide compound (M-4) because the mass spectrum showed a peak of M+ = 816 corresponding to the theoretical structure of n = 1 in the following structural formula (M-4).

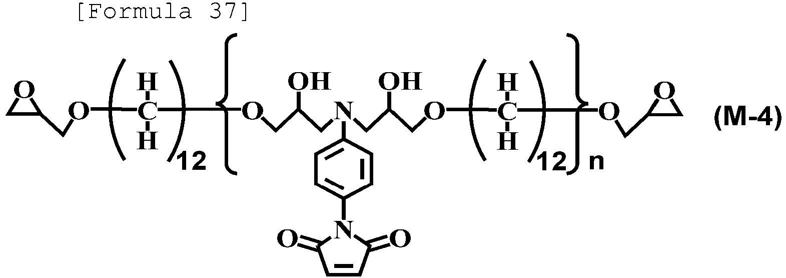

### Example 5

A reaction was carried out in the same manner as in Example 1 except that 48.8 g of the epoxy compound (Ep-1) (epoxy equivalent 488 g/eq) in Example 1 was replaced with 48.1 g of a diglycidyl ether of polypropylene glycol ("DENACOL EX-931" from Nagase ChemteX: epoxy equivalent 481 g/eq) to obtain 47.5 g of a maleimide compound (M-5). The obtained maleimide compound (M-5) had an epoxy equivalent weight of 1035 g/eq. This maleimide compound (M-5) was confirmed to contain the target maleimide compound (M-5) because the mass spectrum showed a peak of M+ = 1724 corresponding to the theoretical structure of n = 1 and n2 = 10 in the following structural formula (M-5).

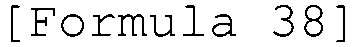

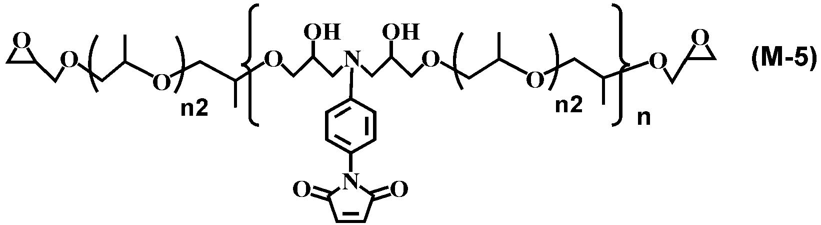

### Example 6

A reaction was carried out in the same manner as in Example 1 except that 48.8 g of the epoxy compound (Ep-1) (epoxy equivalent 488 g/eq) in Example 1 was replaced with 41.5 g of the epoxy compound (Ep-4) (epoxy equivalent 415 g/eq) to obtain 41.6 g of a maleimide compound (M-6). The obtained maleimide compound (M-6) had an epoxy equivalent weight of 906 g/eq.

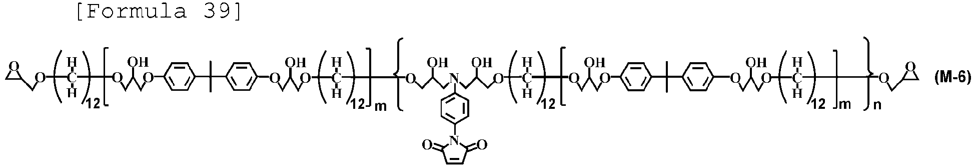

### Example 7

A reaction was carried out in the same manner as in Example 1 except that 48.8 g of the epoxy compound (Ep-1) (epoxy equivalent 488 g/eq) in Example 1 was replaced with 97.3 g of the epoxy compound (Ep-5) (epoxy equivalent 973 g/eq) to obtain 91.8 g of a maleimide compound (M-7). The obtained maleimide compound (M-7) had an epoxy equivalent weight of 1999 g/eq.

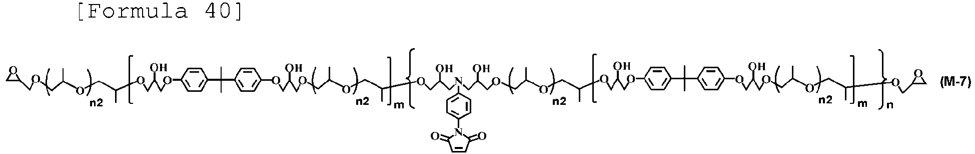

### Example 8

A reaction was carried out in the same manner as in Example 1 except that 48.8 g of the epoxy compound (Ep-1) (epoxy equivalent 488 g/eq) in Example 1 was replaced with 18.8 g of bisphenol A liquid epoxy resin "E-850S" (from DIC Corporation) (epoxy equivalent 188 g/eq) to obtain 21.2 g of a maleimide compound (M-8). The obtained maleimide compound (M-8) had an epoxy equivalent weight of 461 g/eq. This maleimide compound (M-8) was confirmed to contain the target maleimide compound (M-8) because the mass spectrum showed a peak of M+ = 869 corresponding to the theoretical structure of n = 1 in the following structural formula (M-8).

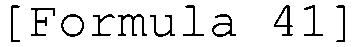

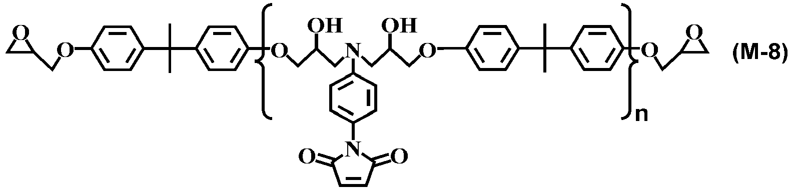

### Example 9

21.4 g of the maleimide compound (M-1) obtained in Example 1, 1.3 g of 9,9'-ethylenebisanthracene (CHEMIELIVA PHARMACEUTICAL CO., LTD.), and 130 g of DMF were measured, mixed, and allowed to dissolve uniformly. The mixture was then poured into an aluminum vat lined with a tetrafluoroethylene sheet. The solution was allowed to react in a dryer at 60°C for 48 hours, and then DMF was removed by vacuum degassing to obtain 21.5 g of a Diels-Alder reaction product (D-1). The obtained Diels-Alder reaction product (D-1) had an epoxy equivalent weight of 1134 g/eq.

### Example 10

A reaction was carried out in the same manner as in Example 9 except that 1.3 g of 9,9'-ethylenebisanthracene (CHEMIELIVA PHARMACEUTICAL CO., LTD.) in Example 9 was replaced with 0.9 g of the furan compound (F-1) to obtain 20.3 g of a Diels-Alder reaction product (D-2). The obtained Diels-Alder reaction product (D-2) had an epoxy equivalent weight of 1115 g/eq.

### Comparative Synthesis Example 1

A reaction was carried out in the same manner as in Example 1 except that 4.7 g (0.025 mol) of N-(4-aminophenylmaleimide) (Tokyo Chemical Industry Co., Ltd.) in Example 1 was replaced with 2.33 g (0.025 mol) of aniline (Tokyo Chemical Industry Co., Ltd.) to obtain 45.4 g of an epoxy compound (Ep-6).

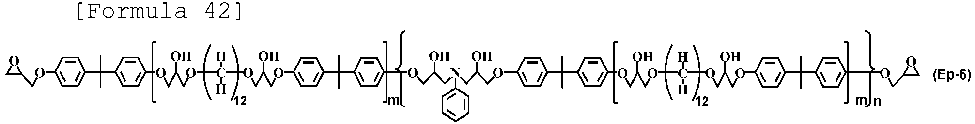

### Comparative Synthesis Example 2

A maleimide compound (M-9) having an ester bond was obtained according to a previous report (Journal of Polymer Science: Part A: Polymer Chemistry, 44, 905 (2006)).

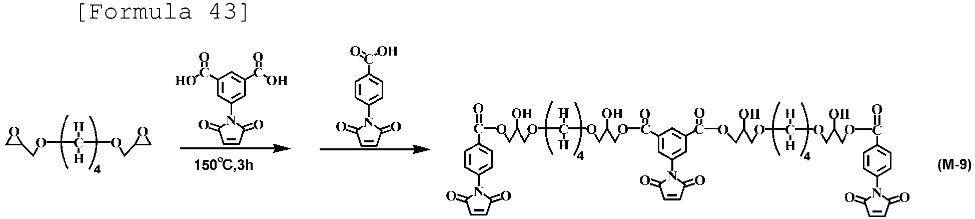

### Synthesis Example 9

A reaction was carried out in the same manner as in Synthesis Example 1 except that 420 g (2.0 equivalents) of the diglycidyl ether of 1,12-dodecanediol (epoxy equivalent 210 g/eq) in Synthesis Example 1 was changed to 798 g (3.8 equivalents) to obtain 1207 g of a hydroxy compound (Ph-3). The hydroxy compound (Ph-4) was confirmed to contain the target hydroxy compound because the mass spectrum showed a peak of M+ = 771 corresponding to the theoretical structure of m = 1 in the following structural formula (Ph-3). The hydroxy compound (Ph-3) had a hydroxyl equivalent weight of 2000 g/eq as calculated from GPC, and the average number of repeating units m was 6.9.

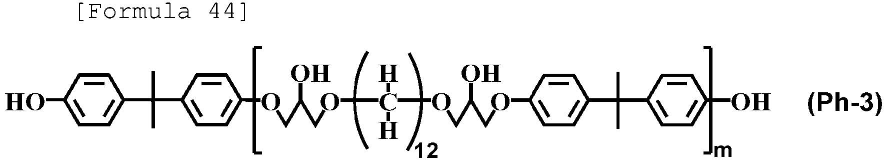

### Synthesis Example 10

A reaction was carried out in the same manner as in Synthesis Example 1 except that 420 g (2.0 equivalents) of the diglycidyl ether of 1,12-dodecanediol (epoxy equivalent 210 g/eq) in Synthesis Example 1 was replaced with 1603 g (3.3 equivalents) of a diglycidyl ether of polypropylene glycol ("DENACOL EX-931" from Nagase ChemteX: epoxy equivalent 481 g/eq) to obtain 2012 g of a hydroxy compound (Ph-4). The hydroxy compound (Ph-4) was confirmed to contain the target hydroxy compound because the mass spectrum showed a peak of M+ = 1226 corresponding to the theoretical structure of m = 1 and n2 = 10 in the following structural formula (Ph-94). The hydroxy compound (Ph-4) had a hydroxyl equivalent weight of 1802 g/eq as calculated from GPC, and the average number of repeating units m was 3.4.

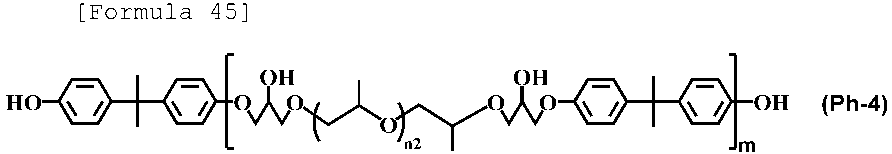

### Synthesis Example 11

A reaction was carried out in the same manner as in Synthesis Example 3 except that 388 g of the hydroxy compound (Ph-1) (hydroxyl equivalent 388 g/eq) in Synthesis Example 3 was replaced with 2000 g of the hydroxy compound (Ph-3) (hydroxyl equivalent 2000 g/eq) to obtain 2120 g of an epoxy compound (Ep-7). The obtained epoxy compound (Ep-7) had an epoxy equivalent weight of 2320 g/eq. The epoxy resin was confirmed to contain the target epoxy compound (Ep-7) because the mass spectrum showed a peak of M+ = 883 corresponding to the theoretical structure of m = 1, q = 1, p₁ = 0, and p₂ = 0 in the following structural formula (Ep-7). The obtained epoxy compound (Ep-1) contained a compound with q = 0. GPC confirmed that the mixture contained 0.7% of the compound with q = 0, and the average number of repeating units q was 6.3.

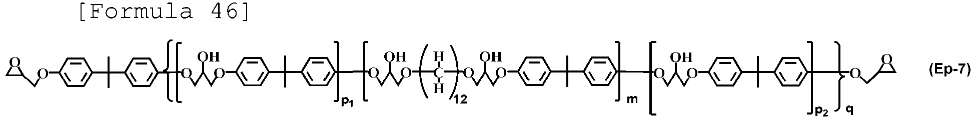

### Synthesis Example 12

A reaction was carried out in the same manner as in Synthesis Example 3 except that 388 g of the hydroxy compound (Ph-1) (hydroxyl equivalent 388 g/eq) in Synthesis Example 3 was replaced with 1802 g of the hydroxy compound (Ph-4) (hydroxyl equivalent 1802 g/eq) to obtain 1851 g of an epoxy compound (Ep-8). The obtained epoxy compound (Ep-8) had an epoxy equivalent weight of 1895 g/eq. The epoxy compound was confirmed to contain the target epoxy compound (Ep-8) because the mass spectrum showed a peak of M+ = 1336 corresponding to the theoretical structure of m = 1, n2 = 11, q = 1, p1 = 0, and p2 = 0 in the following structural formula (Ep-8). The obtained epoxy compound (Ep-8) contained a compound with q = 0. GPC confirmed that the mixture contained 2.8% of the compound with q = 0, and the average number of repeating units q was 3.1.

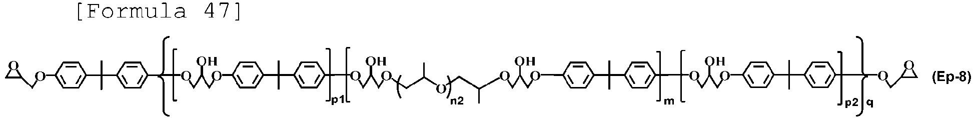

### Preparation of Composition and Cured Product

A curable resin composition was obtained by uniformly mixing each compound with a mixer ("Awatori Neritaro ARV-200" from THINKY CORPORATION) in accordance with the formulation in Tables (the numbers in the tables are based on mass). The curable resin composition was sandwiched between aluminum mirror-finished plates ("JIS H 4000 A1050P" from Engineering Test Service Co., Ltd.) with a silicon tube as a spacer, and heated and cured under predetermined conditions to obtain a cured product with a thickness of 0.7 mm.

### <Tensile Elongation>

The obtained cured product was cut out into a dumbbell shape (JIS K 7161-2-1BA) with a die cutter, and this was used as a specimen. Tensile testing of the specimen was conducted using a tensile tester ("Autograph AG-IS" from Shimadzu Corporation) in accordance with JIS K 7162-2 to determine the elongation at break (test speed: 2 mm/min) at 23°C in a measurement environment.

### <High Temperature and High Humidity Test>

The obtained cured product was placed in a constant temperature and humidity tester ("PSL-2J" from ESPEC CORP.) and exposed to an environment of 85°C/85% for 1000 hours, and the appearance of the cured product was evaluated.

### <Remolding Test>

The prepared cured product was frozen and crushed. 0.07 g of the crushed cured product was placed in a 10 mm square, 0.5 mm thick mold and vacuum-pressed at 150°C/4 hours/10 MPa, followed by aging at 60°C/24 hours. The appearance of the obtained cured product was visually observed. The criteria are as follows.
A: Seams disappeared and the cured product became integrated.
B: Seams were partially visible, but the cured product became integrated.
C: Had solid shape and fell apart when light force was applied.

### <Repair Test>

The prepared cured product was cut with a razor blade, and the resulting fracture surfaces were brought into contact with each other and then aged in a dryer at 130°C/30 min + 60°C/24 hours. After removal from the dryer, the fracture surfaces of the cured product were visually checked for joining. The criteria are as follows.
A: Joined, and bending the cured product 90° does not cause the joined section to dissociate.
B: Joined, and bending the cured product causes the joined section to dissociate.
C: Not joined.

### <Disassembly Test>

A curable resin composition was obtained by uniformly mixing each compound with a mixer ("Awatori Neritaro ARV-200" from THINKY CORPORATION) in accordance with the formulation in Tables (the numbers in the tables are based on mass). The resin composition was applied to one of two cold-rolled steel sheets ("SPCC-SD" from TP Giken, 1.0 mm × 25 mm × 100 mm), glass beads ("J-80" from Potters-Ballotini Co., Ltd.) were added as a spacer, and the other SPCC-SD sheet was laminated (adhesion area: 25 mm × 12.5 mm). This was heated and cured at a temperature according to Tables to obtain a specimen. The specimen was suspended in a dryer at 120°C and loaded by a 500 g weight on one of the substrates. The substrates were allowed to stand in this state for 30 min, and the adhesive condition of the substrates was evaluated. The criteria are as follows.
A: Displacement of the bonded area occurred and the bonded substrate under load fell.
B: Displacement of the bonded area occurred.
C: No change occurred in substrates.

**[Table 1]**

| | | Ex. 11 | Ex. 12 | Ex. 13 | Ex. 14 | Ex. 15 | Ex. 16 |
|---|---|---|---|---|---|---|---|
| Epoxy resin | E-850S | 50 | 50 | 50 | 50 | 50 | 50 |
| | Ep-6 | | | | | | |
| Maleimide compound | M-1 | 50 | | | | | |
| | M-2 | | 50 | | | | |
| | M-3 | | | 50 | | | |
| | M-4 | | | | 50 | | |
| | M-5 | | | | | 50 | |
| | M-6 | | | | | | 50 |
| | M-7 | | | | | | |
| | M-8 | | | | | | |
| | M-9 | | | | | | |
| Diels-Alder reaction product | D-1 | | | | | | |
| Anthracene compound | EBA | 4.5 | 3.1 | 4.8 | 9.3 | 4.5 | 5.2 |
| Curing agent | DICY | 6.6 | 6.3 | 6.7 | 7.7 | 6.6 | 6.7 |
| Curing accelerator | DCMU | 0.85 | 0.85 | 0.85 | 0.85 | 0.85 | 0.85 |
| Reversible bond concentration | mmol/g | 0.22 | 0.16 | 0.24 | 0.44 | 0.23 | 0.26 |
| Curing condition | | 170°C/60min | | | | | |
| Tensile elongation (%) | | 22 | 29 | 30 | 13 | 18 | 15 |
| High temperature and high humidity test | | No change | No change | No change | No change | No change | No change |
| Remolding test | | B | A | A | A | A | B |
| Repair test | | A | A | A | A | A | B |

**[Table 2]**

| | | Ex. 17 | Ex. 18 | Ex. 19 | Comp. Ex. 1 | Comp. Ex. 2 | Comp. Ex. 3 |
|---|---|---|---|---|---|---|---|
| Epoxy resin | E-850S | 50 | 50 | 50 | 50 | 50 | 100 |
| | Ep-6 | | | | 50 | | |
| Maleimide compound | M-1 | | | | | | |
| | M-2 | | | | | | |
| | M-3 | | | | | | |
| | M-4 | | | | | | |
| | M-5 | | | | | | |
| | M-6 | | | | | | |
| | M-7 | 50 | | | | | |
| | M-8 | | 50 | | | | |
| | M-9 | | | | | 50 | |
| Diels-Alder reaction product | D-1 | | | 50 | | | |
| Anthracene compound | EBA | 2.3 | 10.2 | | 4.5 | 6.4 | |
| Curing agent | DICY | 6.1 | 7.9 | 6.5 | 5.6 | 5.6 | 11.2 |
| Curing accelerator | DCMU | 0.85 | 0.85 | 0.85 | 0.85 | 0.85 | 0.85 |
| Reversible bond concentration | mmol/g | 0.12 | 0.48 | 0.23 | 0.23 | 0.31 | 0.00 |
| Curing condition | | 170°C/60min | | | | | |
| Tensile elongation (%) | | 22 | 9 | 18 | <1 | 9 | <1 |
| High temperature and high humidity test | | No change | No change | No change | No change | Yellowed | No change |
| Remolding test | | A | B | B | C | B | C |
| Repair test | | A | A | A | C | B | C |

**[Table 3]**

| | | Ex. 20 | Ex. 21 | Ex. 22 | Ex. 23 | Ex. 24 | Ex. 25 |
|---|---|---|---|---|---|---|---|
| Epoxy resin | E-850S | 50 | 50 | 50 | 50 | 50 | 50 |
| | Ep-6 | | | | | | |
| Maleimide compound | M-1 | 50 | | | | | |
| | M-2 | | 50 | | | | |
| | M-3 | | | 50 | | | |
| | M-4 | | | | 50 | | |
| | M-5 | | | | | 50 | |
| | M-6 | | | | | | 50 |
| | M-7 | | | | | | |
| | M-8 | | | | | | |
| | M-9 | | | | | | |
| Diels-Alder reaction product | D-1 | | | | | | |
| Anthracene compound | EBA | 4.5 | 3.1 | 4.8 | 9.3 | 4.5 | 5.2 |
| Curing agent | DTA | 6.5 | 6.2 | 6.5 | 7.5 | 6.5 | 6.6 |
| Reversible bond concentration | mmol/g | 0.22 | 0.16 | 0.24 | 0.44 | 0.23 | 0.26 |
| Curing condition | | 60°C/24h | | | | | |
| Tensile elongation (%) | | 17 | 22 | 22 | 10 | 13 | 11 |
| High temperature and high humidity test | | No change | No change | No change | No change | No change | No change |
| Remolding test | | B | A | A | A | A | B |
| Repair test | | A | A | A | A | A | B |

**[Table 4]**

| | | Ex. 26 | Ex. 27 | Ex. 28 | Comp. Ex. 4 | Comp. Ex. 5 | Comp. Ex. 6 |
|---|---|---|---|---|---|---|---|
| Epoxy resin | E-850S | 50 | 50 | 50 | 50 | 50 | 100 |
| | Ep-6 | | | | 50 | | |
| Maleimide compound | M-1 | | | | | | |
| | M-2 | | | | | | |
| | M-3 | | | | | | |
| | M-4 | | | | | | |
| | M-5 | | | | | | |
| | M-6 | | | | | | |
| | M-7 | 50 | | | | | |
| | M-8 | | 50 | | | | |
| | M-9 | | | | | 50 | |
| Diels-Alder reaction product | D-1 | | | 50 | | | |
| Anthracene compound | EBA | 2.3 | 10.2 | | 4.5 | 6.4 | |
| Curing agent | DTA | 6.0 | 7.7 | 6.4 | 5.5 | 5.5 | 11.0 |
| Reversible bond concentration | mmol/g | 0.12 | 0.48 | 0.23 | 0.23 | 0.31 | 0.00 |
| Curing condition | | 60°C/24h | | | | | |
| Tensile elongation (%) | | 17 | 7 | 14 | <1 | 6 | <1 |
| High temperature and high humidity test | | No change | No change | No change | No change | Yellowed | No change |
| Remolding test | | A | B | B | C | B | C |
| Repair test | | A | A | A | C | B | C |

**[Table 5]**

| | | Ex. 29 | Ex. 30 | Ex. 31 | Ex. 32 | Ex. 33 | Ex. 34 |
|---|---|---|---|---|---|---|---|
| Epoxy resin | E-850S | 50 | 50 | 50 | 50 | 50 | 50 |
| | Ep-6 | | | | | | |
| Maleimide compound | M-1 | 50 | | | | | |
| | M-2 | | 50 | | | | |
| | M-3 | | | 50 | | | |
| | M-4 | | | | 50 | | |
| | M-5 | | | | | 50 | |
| | M-6 | | | | | | 50 |
| | M-7 | | | | | | |
| | M-8 | | | | | | |
| | M-9 | | | | | | |
| Diels-Alder reaction product | D-2 | | | | | | |
| Furan compound | F-1 | 3.2 | 2.2 | 3.4 | 6.6 | 3.2 | 3.7 |
| Curing agent | DICY | 6.6 | 6.3 | 6.7 | 7.7 | 6.6 | 6.7 |
| Curing accelerator | DCMU | 0.85 | 0.85 | 0.85 | 0.85 | 0.85 | 0.85 |
| Reversible bond concentration | mmol/g | 0.23 | 0.16 | 0.24 | 0.46 | 0.23 | 0.26 |
| Curing condition | | 170°C/60min + 60°C/24h | | | | | |
| Tensile elongation (%) | | 28 | 36 | 37 | 17 | 22 | 19 |
| High temperature and high humidity test | | No change | No change | No change | No change | No change | No change |
| Remolding test | | B | A | A | A | A | B |
| Repair test | | A | A | A | A | A | B |
| Disassembly test | | A | A | A | B | A | A |

**[Table 6]**

| | | Ex. 35 | Ex. 36 | Ex. 37 | Comp. Ex. 7 | Comp. Ex. 8 | Comp. Ex. 9 |
|---|---|---|---|---|---|---|---|
| Epoxy resin | E-8505 | 50 | 50 | 50 | 50 | 50 | 100 |
| | Ep-6 | | | | 50 | | |
| Maleimide compound | M-1 | | | | | | |
| | M-2 | | | | | | |
| | M-3 | | | | | | |
| | M-4 | | | | | | |
| | M-5 | | | | | | |
| | M-6 | | | | | | |
| | M-7 | 50 | | | | | |
| | M-8 | | 50 | | | | |
| | M-9 | | | | | 50 | |
| Diels-Alder reaction product | D-2 | | | 50 | | | |
| Furan compound | F-1 | 1.7 | 7.2 | | 3.2 | 4.5 | |
| Curing agent | DICY | 6.1 | 7.9 | 6.5 | 5.6 | 5.6 | 11.2 |
| Curing accelerator | DCMU | 0.85 | 0.85 | 0.85 | 0.85 | 0.85 | 0.85 |
| Reversible bond concentration | mmol/g | 0.12 | 0.50 | 0.23 | 0.24 | 0.32 | 0.00 |
| Curing condition | | 170°C/60min + 60°C/24h | | | | | |
| Tensile elongation (%) | | 28 | 11 | 23 | <1 | 12 | <1 |
| High temperature and high humidity test | | No change | No change | No change | No change | Yellowed | No change |
| Remolding test | | A | B | B | C | B | C |
| Repair test | | A | A | A | C | B | C |
| Disassembly test | | A | A | A | B | B | C |

**[Table 7]**

| | | Ex. 38 | Ex. 39 | Ex. 40 | Ex. 41 | Ex. 42 | Ex. 43 |
|---|---|---|---|---|---|---|---|
| Epoxy resin | E-850S | 50 | 50 | 50 | 50 | 50 | 50 |
| | Ep-6 | | | | | | |
| Maleimide compound | M-1 | 50 | | | | | |
| | M-2 | | 50 | | | | |
| | M-3 | | | 50 | | | |
| | M-4 | | | | 50 | | |
| | M-5 | | | | | 50 | |
| | M-6 | | | | | | 50 |
| | M-7 | | | | | | |
| | M-8 | | | | | | |
| | M-9 | | | | | | |
| Diels-Alder reaction product | D-2 | | | | | | |
| Furan compound | F-1 | 3.2 | 2.2 | 3.4 | 6.6 | 3.2 | 3.7 |
| Curing agent | DTA | 6.5 | 6.2 | 6.5 | 7.5 | 6.5 | 6.6 |
| Reversible bond concentration | mmol/g | 0.23 | 0.16 | 0.24 | 0.46 | 0.23 | 0.26 |
| Curing condition | | 60°C/24h | | | | | |
| Tensile elongation (%) | | 25 | 33 | 34 | 15 | 20 | 17 |
| High temperature and high humidity test | | No change | No change | No change | No change | No change | No change |
| Remolding test | | B | A | A | A | A | B |
| Repair test | | A | A | A | A | A | B |
| Disassembly test | | A | A | A | B | A | A |

**[Table 8]**

| | | Ex. 44 | Ex. 45 | Ex. 46 | Comp. Ex. 11 | Comp. Ex. 12 | Comp. Ex. 13 |
|---|---|---|---|---|---|---|---|
| Epoxy resin | E-8505 | 50 | 50 | 50 | 50 | 50 | 100 |
| | Ep-6 | | | | 50 | | |
| Maleimide compound | M-1 | | | | | | |
| | M-2 | | | | | | |
| | M-3 | | | | | | |
| | M-4 | | | | | | |
| | M-5 | | | | | | |
| | M-6 | | | | | | |
| | M-7 | 50 | | | | | |
| | M-8 | | 50 | | | | |
| | M-9 | | | | | 50 | |
| Diels-Alder reaction product | D-2 | | | 50 | | | |
| Furan compound | F-1 | 1.7 | 7.2 | | 3.2 | 4.5 | |
| Curing agent | DTA | 6.0 | 7.7 | 6.4 | 5.5 | 5.5 | 11.0 |
| Reversible bond concentration | mmol/g | 0.12 | 0.50 | 0.23 | 0.24 | 0.32 | 0.00 |
| Curing condition | | 60°C/24h | | | | | |
| Tensile elongation (%) | | 25 | 10 | 21 | <1 | 11 | <1 |
| High temperature and high humidity test | | No change | No change | No change | No change | Yellowed | No change |
| Remolding test | | A | B | B | C | B | C |
| Repair test | | A | A | A | C | B | C |
| Disassembly test | | A | A | A | B | B | C |

**[Table 9]**

| | | Ex. 47 | Ex. 48 | Ex. 49 | Ex. 50 | Ex. 51 | Ex. 52 |
|---|---|---|---|---|---|---|---|
| Epoxy resin | E-850S | 40 | 30 | 20 | 40 | 30 | 20 |
| | Ep-7 | 10 | 20 | 30 | | | |
| | Ep-8 | | | | 10 | 20 | 30 |
| Maleimide compound | M-1 | 50 | 50 | 50 | | | |
| | M-2 | | | | 50 | 50 | 50 |
| Furan compound | F-1 | 3.2 | 3.2 | 3.2 | 2.2 | 2.2 | 2.2 |
| Curing agent | DICY | 5.6 | 4.5 | 3.5 | 5.3 | 4.3 | 3.3 |
| Curing accelerator | DCMU | 0.85 | 0.85 | 0.85 | 0.85 | 0.85 | 0.85 |
| Reversible bond concentration | mmol/g | 0.23 | 0.23 | 0.23 | 0.16 | 0.16 | 0.16 |
| Curing condition | | 170°C/60min + 60°C/24h | | | | | |
| Tensile elongation (%) | | 29 | 32 | 35 | 38 | 40 | 45 |
| High temperature and high humidity test | | No change | No change | No change | No change | No change | No change |
| Remolding test | | B | A | A | A | A | A |
| Repair test | | A | A | A | A | A | A |
| Disassembly test | | A | A | A | A | A | A |

The components listed in the tables are as follows.
E-850S: bisphenol A liquid epoxy resin (from DIC Corporation, epoxy equivalent 188g/eq)
EBA: 9,9'-ethylenebisanthracene (from CHEMIELIVA PHARMACEUTICAL CO., LTD.)
DICY: dicyandiamide ("DICY7" from Mitsubishi Chemical Corporation)
DCMU: 3-(3,4-dichlorophenyl)-1,1-dimethylurea) ("B-605-IM" from DIC Corporation)
DTA: diethylenetriamine (from KANTO CHEMICAL CO., INC.)

## Claims

1. A curable compound comprising a curable functional group at an end of a linear polymer, and comprising a maleimide structure in a side chain.

2. The curable compound according to claim 1, wherein the linear polymer includes a flexible structure.

3. The curable compound according to claim 2, wherein the curable functional group is a hydroxyl group or a glycidyl ether group and the flexible structure is an alkylene chain or an alkylene ether chain.

4. The curable compound according to claim 3, wherein the alkylene chain has 4 to 16 carbon atoms.

5. A curable compound represented by the following general formula: 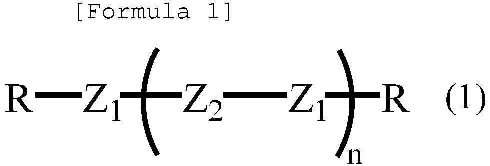
wherein R is a hydroxyl group, a glycidyl ether group, or a 2-methylglycidyl ether group;
Z₁ is any of the following (Z₁-1) to (Z₁-7), 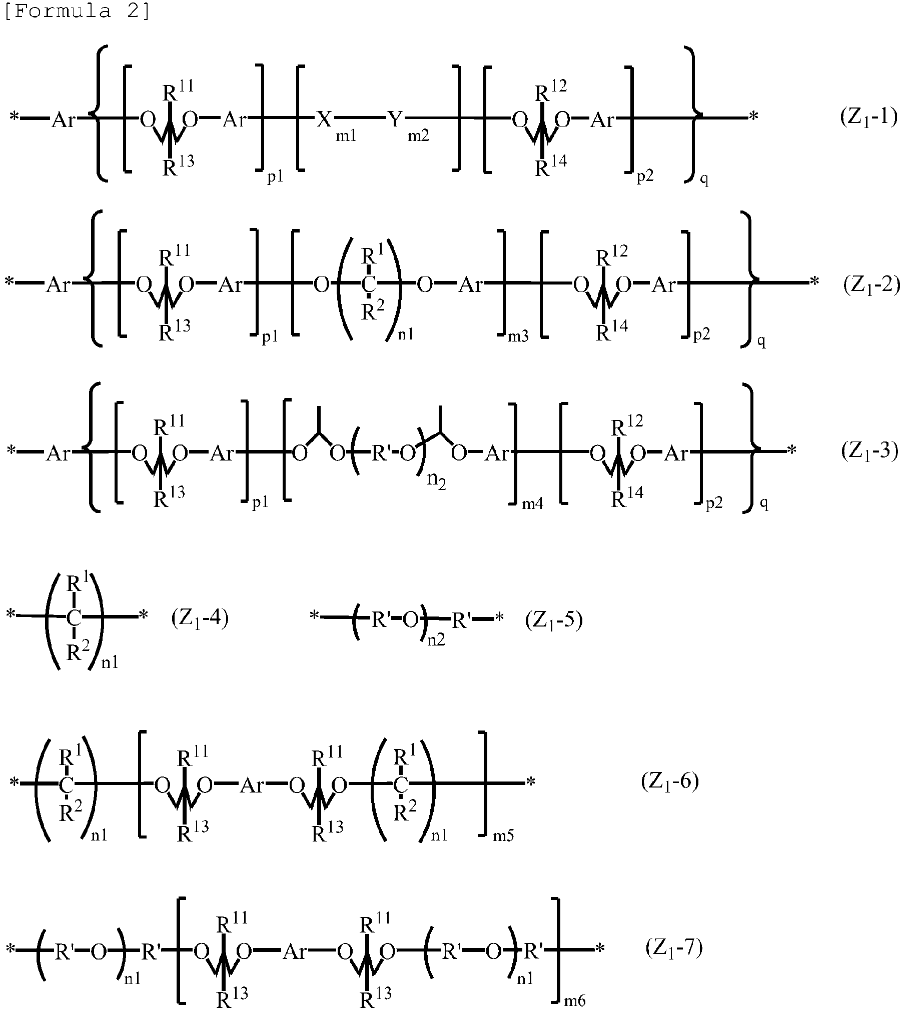
wherein each Ar is independently a structure having an aromatic ring unsubstituted or having a substituent,
R¹¹ and R¹² are each independently a hydroxyl group, a glycidyl ether group, or a 2-methylglycidyl ether group,
R¹³ and R¹⁴ are each a hydrogen atom or a methyl group,
R¹ and R² are each independently a hydrogen atom, a methyl group, or an ethyl group,
each R' is independently a divalent hydrocarbon group having 2 to 12 carbon atoms,
n is an average number of repeating units and 0.5 to 10,
n1 is an integer of 4 to 16, and
n2 is an average number of repeating units and 2 to 30,
X in formula (Z₁-1) is a structural unit represented by the following general formula (Z₁-1-1) and Y is a structural unit represented by the following general formula (Z₁-1-2), 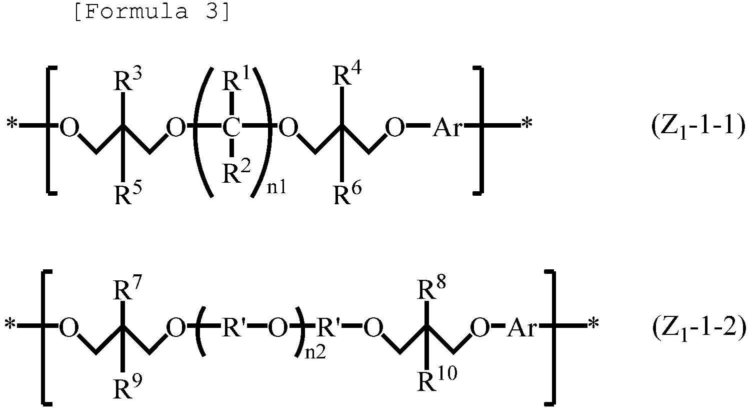
wherein Ar, R¹, R², R', n1, and n2 are as defined above, R³, R⁴, R⁷, and R⁸ are each independently a hydroxyl group, a glycidyl ether group, or a 2-methylglycidyl ether group, and
R⁵, R⁶, R⁹, and R¹⁰ are each independently a hydrogen atom or a methyl group,
m1, m2, m3, m4, m5, m6, p1, p2, and q are each an average number of repetitions,
where m1, m2, m3, m4, m5, and m6 are each independently 0 to 25,
p1 and p2 are each independently 0 to 5, and
q is 0.5 to 5,
provided that bonding between X represented by the general formula (Z₁-1-1) and Y represented by the general formula (Z₁-1-2) is optionally random or block, and total numbers of the structural units X and Y in one molecule are m1 and m2, respectively;
Z₂ is a structural unit represented by the following general formula (Z₂), 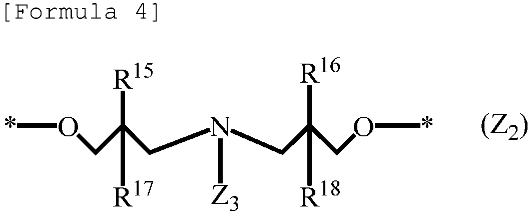
wherein Z₃ is a structure having a maleimide skeleton,
R¹⁵ and R¹⁶ are each independently a hydroxyl group, a glycidyl ether group, or a 2-methylglycidyl ether group, and
R¹⁷ and R¹⁸ are each a hydrogen atom or a methyl group, * in each formula represents a bonding point.

6. A curable compound (II) comprising a reversible bond between the maleimide structure in the curable compound (I) according to any one of claims 1 to 5 and a conjugated diene compound by Diels-Alder reaction.

7. The curable compound (II) according to claim 6, wherein the conjugated diene compound has a furan structure or an anthracene structure.

8. A curable resin composition comprising:
a curable compound (II) comprising a reversible bond between the maleimide structure in the curable compound (I) according to any one of claims 1 to 5 and a conjugated diene compound by Diels-Alder reaction; and
a compound (III) having reactivity with a curable functional group at an end in the curable compound (II).

9. The curable resin composition according to claim 8, wherein
the curable functional group at an end in the curable compound (II) is a hydroxyl group,
the compound (III) having reactivity with the curable functional group at an end in the curable compound is an epoxy resin, and
the conjugated diene compound has a furan structure or an anthracene structure.

10. The curable resin composition according to claim 8, wherein
the curable functional group at an end in the curable compound (II) is a glycidyl ether group,
the compound (III) having reactivity with the curable functional group at an end in the curable compound (II) is a curing agent for epoxy resin, and
the conjugated diene compound has a furan structure or an anthracene structure.

11. The curable resin composition according to claim 8, wherein a concentration of reversible bonds by Diels-Alder reaction to a total mass of curable components in the curable resin composition is 0.10 mmol/g or more.

12. A curable resin composition, wherein the curable resin composition according to claim 8 is one or more compositions selected from the group consisting of easy-disassembly compositions, repairable compositions, and compositions for remolding materials.

13. A cured product made by curing the curable resin composition according to claim 8.

14. A laminate comprising a substrate and a layer including the cured product according to claim 13.

15. A heat-resistant member comprising the cured product according to claim 13.

16. A curable resin composition comprising:
the curable compound (I) according to any one of claims 1 to 5;
a conjugated diene compound; and
a compound (III) having reactivity with the curable functional group at an end in the curable compound.

17. The curable resin composition according to claim 16, wherein
the curable functional group at an end in the curable compound (I) is a hydroxyl group,
the compound (III) having reactivity with the curable functional group at an end in the curable compound is an epoxy resin, and
the conjugated diene compound has a furan structure or an anthracene structure.

18. The curable resin composition according to claim 16, wherein
the curable functional group at an end in the curable compound (I) is a glycidyl ether group,
the compound (III) having reactivity with the curable functional group at an end in the curable compound is a curing agent for epoxy resin, and
the conjugated diene compound has a furan structure or an anthracene structure.

19. The curable resin composition according to claim 16, wherein a concentration of reversible bonds by Diels-Alder reaction between the maleimide structure and the conjugated diene compound to a total mass of curable components in the curable resin composition is 0.10 mmol/g or more.

20. A curable resin composition, wherein the curable resin composition according to claim 16 is one or more compositions selected from the group consisting of easy-disassembly compositions, repairable compositions, and compositions for remolding materials.

21. A cured product made by curing the curable resin composition according to claim 16.

22. A laminate comprising a substrate and a layer including the cured product according to claim 21.

23. A heat-resistant member comprising the cured product according to claim 21.
